# EUROPÄISCHE PATENTSCHRIFT

(11) **EP 3 862 147 B1**
(45) Veröffentlichungstag und Bekanntmachung des Hinweises auf die Patenterteilung: **10.04.2024**
(21) Anmeldenummer: 21155475.3
(22) Anmeldetag: 05.02.2021
(51) Int. Cl.: B25J 9/16, B23K 26/044, B23K 26/08, B23K 37/00

(54) **VERFAHREN ZUR SICHERHEITSSTEUERUNG EINER, AN EINEM MEHRACHSIGEN MANIPULATOR ANGEORDNETEN STRAHLQUELLE SOWIE ZUGEORDNETE VORRICHTUNG**
METHOD FOR SAFETY CONTROL OF A BEAM SOURCE ARRANGED ON A MULTI-AXIS MANIPULATOR AND ASSOCIATED DEVICE
PROCÉDÉ DE COMMANDE DE SÉCURITÉ D'UNE SOURCE DE RAYONNEMENT DISPOSÉE SUR UN MANIPULATEUR À AXES MULTIPLES, AINSI QUE DISPOSITIF ASSOCIÉ

(30) Priorität: 05.02.2020 DE 102020102916
(43) Veröffentlichungstag der Anmeldung: 11.08.2021
(73) Patentinhaber: Carl Cloos Schweißtechnik Gesellschaft mit beschränkter Haftung, 35708 Haiger (DE)
(72) Erfinder: Löhr, Rainer, 35708 Haiger (DE); Höfner, Lars, 35687 Dillenburg-Niederscheld (DE)
(74) Vertreter: Lippert Stachow Patentanwälte Rechtsanwälte

(56) Entgegenhaltungen:
- US-A1- 2012 127 165
- US-A1- 2017 157 703
- Stefan Rainer Johann Braunreuther: "Untersuchungen zur Lasersicherheit für Materialbearbeitungsanwendungen mit brillanten Laserstrahlquellen", , 1. Januar 2013 (2013-01-01), XP055811860, Gefunden im Internet: URL:https://www.mw.tum.de/fileadmin/w00btx /iwb/Institut/Dissertationen/283_Braunreut her_Stefan.pdf [gefunden am 2021-06-08]

## Beschreibung

Die Erfindung betrifft ein Verfahren zur Sicherheitssteuerung einer, an einem mehrachsigen Manipulator angeordneten Strahlquelle wie einer Laserlichtquelle, wobei die Strahlquelle von dem Manipulator innerhalb einer nicht vollständig geschlossenen Schutzumhausung zur Ausführung einer Betriebsfunktion bewegt wird sowie eine zugeordnete Vorrichtung zur Durchführung eines solchen Verfahrens.

Bei der Ausführung von Arbeitsverfahren durch mehrachsige Manipulatoren, beispielsweise bei der Montage von Bauteilen oder bei der Bearbeitung von Werkstücken wie der Durchführung von Schweißverfahren an Werkstücken ist die Verwendung von Schutzumhausungen aus Sicherheitserwägungen wohlbekannt. Wird beispielsweise ein Schweißverfahren mittels eines vom Manipulator geführten Laserschweißgerätes ausgeführt, sind Laserschutzkabinen als Schutzumhausung bekannt, die bei der Ausführung der Betriebsfunktion, d.h. dem Schweißen vollständig geschlossen sind, um sicherzustellen, dass kein Lichtstrahl die Laserschutzkabine verlassen kann und evtl. außerhalb der Laserschutzkabine befindliche Gegenstände und/oder Personen geschädigt werden. Eine solche Laserschutzkabine ist beispielsweise im Gebrauchsmuster DE 20 2017 100 414 U1 beschrieben. Neben rein passiven Schutzumhausungen sind auf dem Gebiet auch Schutzumhausungen bekannt, welche an ihren inneren Begrenzungsflächen Sensoreinrichtungen wie Sensorfolien aufweisen zum Erfassen des Auftreffens von Strahlenergie, insbesondere von Laserstrahlenergie, wobei diese Sensormittel in Abhängigkeit der Laserstrahlintensität und/oder einer Strahlungsdichte und/oder einer Strahlungsdauer der Laserstrahlung eine physikalische Eigenschaft ändern und ein diesbezügliches Sensorsignal ausgeben in Abhängigkeit dessen beispielsweise eine Sicherheitsfunktion wie eine Sicherheitsabschaltung ausführbar ist. Eine derartige Schutzvorrichtung ist beispielsweise in dem Gebrauchsmuster DE 20 2017 105 570 U1 offenbart.

Die Gestaltung dieser herkömmlichen Schutzumhausungen ist mit einem nicht unerheblichen vorrichtungsseitigen Aufwand und damit erhöhten Kosten verbunden. Dies kann beispielsweise auch die Größe der Schutzumhausung betreffen.

Die US 20170157703 A1 betrifft eine Überwachungsvorrichtung für ein Bearbeitungssystem zum Bearbeiten eines Werkstückes innerhalb einer Sicherheitszelle mittels eines hochenergetischen Prozessstrahls, beispielsweise einem Laserstrahl. Die Überwachungsvorrichtung umfasst eine Messstrahlquelle zur Bereitstellung eines Messstrahls sowie eine Aufnahmeeinheit zur Erfassung eines von der Umgebung reflektierten Teil des Messstrahls. Die Überwachungsvorrichtung ist eingerichtet, den Messstrahl in eine Bearbeitungsstrahloptik des Bearbeitungssystems einzukoppeln, sodass der Messstrahl und der Bearbeitungsstrahl auf gemeinsame Positionen in der Umgebung richtbar sind, wobei die Überwachungsvorrichtung ferner dazu ausgebildet ist, mittels einer Lichtlaufzeitmessung für den detektierten, reflektierten Anteil des Messstrahls einen ersten Abstandswert zu ermitteln, der einen Rückschluss auf einen Abstand der Bearbeitungsstrahloptik zu dem, den Messstrahl reflektierenden Bereich der Umgebung zulässt. Die Überwachungsvorrichtung umfasst ferner eine Auswerteeinheit, mit welcher geprüft wird, ob der so ermittelte Abstand innerhalb eines zulässigen Wertebereichs liegt.

Die US20120127165 A1 betrifft ein System und ein Verfahren zum Anzeigen von dreidimensionalen Roboterarbeitszellendaten, umfassend das Erzeugen der Roboterarbeitszellendaten, eine Anzeigevorrichtung mit einem Webbrowser zum Empfangen der Roboterarbeitszellendaten und zum Anzeigen einer dreidimensionalen Wiedergabe der Roboterarbeitszellendaten sowie das Manipulieren der dreidimensionalen Wiedergabe auf der Anzeigevorrichtung. Das System und das Verfahren ermöglichen dem Benutzer einen Zugang zu zuverlässigen dreidimensionalen Anzeigen als Hilfe beim Einlerne und zur Wartung eines Roboters.

Insofern liegt der vorliegenden Erfindung die Aufgabe zugrunde, den Betrieb einer Strahlquelle, die an einem mehrachsigen Manipulator angeordnet und von diesem innerhalb einer nicht vollständig geschlossenen Schutzumhausung zur Ausführung einer Betriebsfunktion bewegt wird, zu vereinfachen und/oder kostengünstiger zu gestalten.

Diese Aufgabe wird verfahrensseitig schon durch ein Verfahren zur Sicherheitssteuerung einer Strahlquelle wie einer Laserlichtquelle gelöst, wobei die Strahlquelle an einem mehrachsigen Manipulator angeordnet und von diesem innerhalb einer nicht vollständig geschlossenen Schutzumhausung zur Ausführung einer Betriebsfunktion bewegt wird, wobei die Strahlquelle an einem vorgegebenen Montageort und mit einer vorgegebenen Strahlausrichtung am Manipulator befestigt wird. Das erfindungsgemäße Verfahren umfasst zumindest die Schritte
a) Bereitstellen eines Computermodells, umfassend einen Datensatz zur zumindest angenäherten datentechnischen Festlegung von Begrenzungsflächen der Schutzumhausung, wobei einem Öffnungsabschnitt der Schutzumhausung zumindest eine virtuelle Begrenzungsfläche im Computermodell datentechnisch zugeordnet wird,
b) Ermitteln von Positionskoordinaten eines vorbestimmten Bezugspunktes im Bereich des Montageortes am Manipulator oder der Strahlquelle;
c) Ermittlung der Strahlrichtung der Strahlquelle unter Berücksichtigung der ermittelten Positionskoordinaten des Bezugspunktes und der vorgegebenen Strahlausrichtung der Strahlquelle;
d) Ermittlung zumindest eines Auftreffortes des am Strahlaustritt aus der Strahlquelle austretenden Strahls an zumindest einer Begrenzungsfläche der Schutzumhausung bzw. an zumindest einer virtuellen Begrenzungsfläche der Schutzumhausung;
e) Überprüfung, ob der zumindest eine Auftreffort des Strahls auf einer Begrenzungsfläche der Schutzumhausung liegt;
f) Ermitteln eines Abstandes des ermittelten Auftreffortes zu einem vorbestimmten Referenzort der Strahlquelle, insbesondere zum Strahlaustrittsort des Strahls an der Strahlquelle; und
g) Vergleichen des Abstandes mit einer vorgegebenen Abstandsschwelle, wobei ein Freigabesignal oder ein Nichtfreigabesignal in Abhängigkeit des Ergebnisses des Vergleiches gemäß Schritt f) und/oder in Abhängigkeit des Ergebnisses der Überprüfung gemäß Schritt e) ausgegeben wird, um die Strahlquelle zur Strahlabgabe oder zur Strahlnichtabgabe anzusteuern, wobei die Schritte d) und e) mittels einer Berechnung durchgeführt werden auf der Grundlage des Datensatzes zur Festlegung der Begrenzungsflächen und/oder der zumindest einen virtuellen Begrenzungsfläche sowie Information über Positionskoordinaten des Bezugspunktes sowie der Strahlausrichtung der Strahlquelle.

Dem erfindungsgemäßen Verfahren liegt die Erkenntnis zugrunde, dass die hermetische Abschirmung einer Strahlquelle innerhalb einer Schutzumhausung nicht in jedem Anwendungsfall sichergestellt sein muss bzw. die physikalische Einwirkung eines Strahls der Strahlquelle auf die Schutzumhausung selbst nicht in jedem Anwendungsfall erfasst werden muss, um die Strahlquelle sicher ohne Gefährdung von Gegenständen und/oder Personen zur Ausführung einer Betriebsfunktion innerhalb der Schutzumhausung mittels des Manipulators zu führen bzw. zu bewegen. Demgegenüber haben die Erfinder erkannt, dass es in einer Vielzahl von Anwendungsfällen ausreicht, ohne Verwendung expliziter Sensorik an den Begrenzungswandungen bzw. den Begrenzungsflächen der Schutzumhausung zu ermitteln, ob ein Strahl, insbesondere ein Laserstrahl der Strahlquelle, für Personen und/oder Gegenstände außerhalb der Schutzumhausung schädlich sein kann und insofern abgeschaltet werden muss. Die Erfinder schlagen demnach einen zum Stand der Technik anderen Weg vor, nämlich die Ermittlung eines Auftreffortes des Strahls der Strahlquelle an einer inneren Begrenzungsfläche der Schutzumhausung bzw. an einer, einem Öffnungsabschnitt der Schutzumhausung zugeordneten "virtuellen Begrenzungsfläche" ohne die Verwendung von Sensormittel zum Nachweis des Strahls, um dann zu entscheiden, ob der Strahl am ermittelten Auftreffort eine Gefährdungswirkung aufweist oder nicht. Dabei kann diese Entscheidung erfindungsgemäß davon abhängig gemacht werden, ob der Abstand des Auftreffortes (im Folgenden gleichbedeutend mit Schnittortes, da bei der Durchführung des Verfahrensschrittes mathematisch ein jeweiliger Schnittort des Strahls mit einer (realen) Begrenzungsfläche bzw. einer virtuellen Begrenzungsfläche ermittelt werden kann) zu einem vorbestimmten Referenzort der Strahlquelle, beispielsweise zum Austrittsort des Strahls an der Strahlquelle größer oder , kleiner als eine vorgegebene Abstandsschwelle ist, um dann in Abhängigkeit dessen z.B. ein Freigabesignal oder ein Nichtfreigabesignal auszugeben, mit welchem die Strahlquelle zur Strahlabgabe oder zur Nichtstrahlabgabe ansteuerbar ist. Diese vorgegebene Abstandsschwelle kann insbesondere von der jeweils verwendeten Strahlquelle abhängen und beispielsweise eine Abstandsschwelle angeben, bei welcher die abgegebene Strahlung gerade keine Gefährdung von sich außerhalb der Schutzumhausung befindlichen Personen und/oder Gegenständen mehr darstellt. Beispielsweise kann je nach Strahlquelle die Wirkung des Strahls vom Abstand des jeweiligen Schnittortes zum Strahlaustrittsort abhängen, insbesondere in der Art, dass die Wirkung mit steigendem Abstand nachlässt. Bei einem Laserstrahl, beispielsweise zum Abtasten eines Werkstückes oder einem Laserstrahl zum Schweißen eines Werkstückes, kann diese Wirkung aufgrund einer vorliegenden Divergenz des Strahles mit steigendem Abstand geringer werden. In ähnlicher Weise kann dies beispielsweise für die Wirkung eines Flüssigkeitsstrahls gelten, der beispielsweise als Schneidstrahl zur Erzeugung von Schnitten in Materialien eingesetzt werden kann. Das erfindungsgemäße Verfahren kann in vielen Fällen die Notwendigkeit, möglichst große Schutzumhausungen bei der Verwendung von Strahlquellen aus Sicherheitserwägungen vorzusehen, vermindern. Ferner kann durch Ausführung der Erfindung in vielen Anwendungsfällen die Gestaltung der Schutzumhausung vereinfacht werden, u.U. eine oder gar mehrere Schutzwandabschnitte bzw. Schutzwände ganz weggelassen werden.

Die Angabe "Öffnungsabschnitt" der Schutzumhausung meint in der vorliegenden Anmeldung einen Abschnitt, der nicht durch Wand-, Decken- oder Bodenabschnitte der Umhausung geschlossen ist, sondern einen Abschnitt oder Bereich, durch den ein Strahl, insbesondere ein Laserstrahl, die Schutzumhausung verlassen kann. Grundsätzlich meint die Angabe "Begrenzungsfläche der Schutzumhausung" eine tatsächliche Begrenzungsfläche, während dazu im Unterschied "virtuelle Begrenzungsfläche" eine Fläche bezeichnen kann, über welche ein Strahl einen durch die Schutzumhausung festgelegten Raum verlassen kann.

Für den Schritt des Ermittelns von Positionskoordinaten eines vorbestimmten Bezugspunktes im Bereich des Montageortes am Manipulator oder der Strahlquelle kann beispielsweise ein Anflanschort der Strahlquelle am Manipulator oder in einem weiteres Beispiel ein Strahlaustrittort der Strahlquelle als Bezugsort herangezogen werden.

Es sei bemerkt, dass die Reihenfolge bei der Durchführung der Schritte a) bis g) des erfindungsgemäßen Verfahrens variieren kann. Insbesondere kann im Rahmen der Erfindung vorgesehen sein, bei der Durchführung der Schritte a) bis g) die Reihenfolge bei Ausführung der Schritte f) und e) zu verändern, d.h. nach der Durchführung der Schritte a) bis d) zunächst den Schritt f) auszuführen und danach den Schritt e), auf den dann der Schritt g) ausgeführt wird. Es sei ferner bemerkt, dass die Ermittlung von Positionskoordinaten, die Ermittlung der Strahlrichtung der Strahlquelle, die Ermittlung des Schnittortes und/oder die Ermittlung des Abstandes jeweils die Ermittlung eines Istwerts, d.h. eines jeweiligen aktuellen Wertes sein kann. Es kann auch vorgesehen sein, dass die Ermittlung von Positionskoordinaten, die Ermittlung der Strahlrichtung der Strahlquelle, die Ermittlung des Schnittortes und/oder die Ermittlung des Abstandes jeweils die Ermittlung eines prognostizierten jeweiligen Wertes ist, in diesem Fall kann das erfindungsgemäße Verfahren insofern "vorausschauend" arbeiten.

Wie der Fachmann erkennt, können mit der Durchführung des erfindungsgemäßen Verfahrens Anforderungen an die Gestaltung der Schutzumhausung erniedrigt werden, z.B. in Bezug auf die Größe der Schutzumhausung. Insbesondere eignet sich das erfindungsgemäße Verfahren auch für nicht vollständig geschlossene Schutzumhausungen, innerhalb deren die jeweilige Strahlquelle an einem mehrachsigen Manipulator angeordnet und von diesem zur Ausführung einer Betriebsfunktion bewegt wird.

Es sei bemerkt, dass die Angabe "Freigabe- oder Nichtfreigabesignal" ein Steuersignal zur direkten oder indirekten Ansteuerung der Strahlquelle meint, mit welchem diese zur Strahlabgabe oder zur Nichtstrahlabgabe angesteuert wird.

Zweckmäßigerweise kann vorgesehen sein, dass zumindest einige der Schritte a) bis g), insbesondere alle Verfahrensschritte computergestützt ausgeführt werden, sodass ein automatischer Ablauf des erfindungsgemäßen Verfahrens ohne Zutun eines Benutzers bereitgestellt werden kann. Wie obenstehend angegeben, erfolgt der Überprüfungsschritt e) und der Schritt d) zur Ermittlung des Schnittortes bzw. Auftreffortes erfindungsgemäß ohne Verwendung eines Sensors, der den Strahl an einer (realen) Begrenzungsfläche und/oder einer virtuellen Begrenzungsfläche der Schutzumhausung erfasst, sondern stattdessen mittels einer insbesondere rechner- oder controllergestützten Berechnung auf der Grundlage des Computermodells bzw. des Datensatzes zur Festlegung bzw. Beschreibung der Begrenzungsflächen und/oder der virtuellen Begrenzungsflächen sowie der Information über, insbesondere aktuelle oder prognostizierte, Koordinationsdaten eines Referenzpunktes sowie einer, insbesondere aktuellen oder prognostizierten, Strahlausrichtung des Manipulators bzw. der Strahlquelle.

Weitere erfindungsgemäße Merkmale sowie Weiterbildungen der Erfindung sind in der nachfolgenden allgemeinen Beschreibung, den Figuren, der Figurenbeschreibung sowie den Unteransprüchen angegeben.

Das erfindungsgemäße Verfahren kann so ausgebildet sein, dass ein Freigabesignal ausgegeben wird, wenn der ermittelte Abstand des ermittelten Auftreffortes größer ist als die vorgegebene Abstandsschwelle, oder, wenn der ermittelte Schnittort (Auftreffort) auf einer Begrenzungsfläche der Schutzumhausung liegt, sodass in diesen Fällen die Strahlquelle zur Strahlabgabe angesteuert wird. In einer weitergehenden Ausführungsform kann auch vorgesehen sein, eine Zeitdauer zu ermitteln, über welche der ermittelte Schnittort auf einer Begrenzungsfläche der Schutzumhausung gleich, d.h. unveränderlich bleibt, um bei Überschreitung einer vorgegebenen Verweildauer an diesem ermittelten Schnittort bzw. Auftreffort hinaus ein Nichtfreigabesignal abgegeben werden kann, zur Ansteuerung der Strahlquelle zur Strahlnichtabgabe. Wenn der ermittelte Abstand des Schnittortes kleiner ist als die vorgegebene Abstandsschwelle und wenn gleichzeitig der ermittelte Schnittort auf einer virtuellen Begrenzungsfläche der Schutzumhausung liegt, kann vorteilhafterweise vorgesehen sein, dass die Strahlquelle zur Strahlnichtabgabe angesteuert wird, um eine potentielle Gefährdung eines außerhalb der Schutzumhausung befindlichen Gegenstands bzw. befindlichen Person zu vermeiden.

Es kann zweckmäßigerweise vorgesehen sein, insbesondere zur Aufrechterhaltung der erfindungsgemäßen Sicherheitssteuerung der Strahlquelle über die gesamte Ausführungszeit der Betriebsfunktion,, dass die Sequenz der obengenannten Schritte b) bis g) während der Durchführung der Betriebsfunktion fortlaufend ausgeführt oder zumindest getaktet, d.h. regelmäßig bzw. mit einem vorgegebenen zeitlichen Abstand zueinander ausgeführt wird.

Insbesondere in solchen Anwendungsfällen, bei welchen die Strahlquelle eine Laserlichtquelle darstellt, kann der Strahlquerschnitt im Wesentlichen punktförmig, insbesondere gaußangenähert mit einem Divergenzwinkel < 300 mrad, insbesondere < 5 mrad ausgebildet sein. Hierunter können eine Vielzahl von Laserlichtquellen fallen, insbesondere auch Laserlichtquellen mit gaußförmigem oder ähnlichem Strahlquerschnitt oder solche, welche komplexe TEM-Moden aufweisen. Es sei darauf hingewiesen, dass die Erfindung auch auf nicht quasi punktförmige Strahlquerschnitte beschränkt ist, stattdessen kann dieser auch linienförmig ausgebildet sein, sodass insofern auch der Schnittort bzw. der Auftreffort, insbesondere bei ebenen Begrenzungsflächen, linienförmig sein kann. Erfindungsgemäß kann vorgesehen sein, dass der Strahlquerschnitt im Wesentlichen punktförmig, gaußförmig oder linienförmig ist bei einem Divergenzwinkel zwischen 0,1 mrad und 300 mrad.

Das erfindungsgemäße Verfahren kann für eine Vielzahl von Betriebsfunktionen, bei welcher eine Strahlquelle, insbesondere einer Laserlichtquelle, durch einen Manipulator bewegt wird, ausgebildet sein. Beispielsweise kann diese Betriebsfunktion das Laserschweißen umfassen, wobei die Strahlquelle als Laserlichtquelle ausgebildet ist und die Schweißenergie in das Werkstück einbringt. In einer anderen Ausführungsform kann auch vorgesehen sein, dass die Betriebsfunktion einen Vorbereitungsschritt zur roboterunterstützten Schweißnaht-Herstellung an zumindest einem zu schweißenden Werkstück umfasst bzw. ist, beispielsweise in Form einer Schweißfugenverfolgung und/oder einer Schweißfugenerfassung an dem zumindest einen zu schweißenden Werkstück, insbesondere durch Laserscannen der Fugen- bzw. Fügestellen ausgeführt. Eine derartige Schweißfugenverfolgung und/oder -erfassung kann insbesondere in Verbindung mit einem Lichtbogenschweißen durchgeführt werden, beispielsweise dadurch, dass vor der eigentlichen Schweißung eine robotergestützte Laserscannung der Schweißfugen erfolgt zur Erfassung und Festlegung von Bewegungsdaten des Roboters, die bei dem nachfolgenden Schweißvorgang, insbesondere einem nachfolgenden Lichtbogenschweißvorgang oder eine Schweißung nach einem anderen Verfahren wie einem Laserschweißverfahren, zur Steuerung des Schweißroboters zugrunde gelegt werden können.

Grundsätzlich kann der bei der Durchführung des erfindungsgemäßen Verfahrens eingesetzte Manipulator als Bewegungsautomat, insbesondere als Roboter, beispielsweise als Industrieroboter ausgebildet sein, der eine Mehrzahl von Bewegungsachsen aufweist, wobei die jeweilige Bewegungsform der jeweiligen Achse sowie die Anzahl und Anordnung der Achsen an die jeweilige Betriebsfunktion angepasst sein kann. In den meisten Anwendungen des erfindungsgemäßen Verfahrens wird der Roboter mehr als 6 oder 7 Achsen aufweisen, die Verwendung von Roboter mit weniger als 6 Achsen bei der Durchführung des erfindungsgemäßen Verfahrens liegt jedoch auch im Rahmen der Erfindung.

Zur Erstellung des Computermodells zur datentechnischen Darstellung von Begrenzungsflächen der Schutzumhausung sowie zumindest einer virtuellen Begrenzungsfläche der Schutzumhausung kann das Computermodell auf der Grundlage eines Drahtgittermodells ausgeführt werden. Ein Computermodell kann zur datentechnischen Darstellung der Begrenzungsflächen und/oder zumindest einer virtuellen Begrenzungsfläche eine Mehrzahl von zueinander angeordneten ebenen Begrenzungsflächen bzw. ebenen virtuellen Begrenzungsflächen oder Begrenzungsebenen bzw. virtuelle Begrenzungsebenen aufweisen. Dabei kann dieses Modell je nach Ausführungsform der Schutzumhausung eine genaue datentechnische Abbildung darstellen oder eine Annäherung der Flächen an die realen Grenzflächen darstellen, insbesondere in solchen Fällen, bei welchen die Schutzumhausung zumindest abschnittsweise gekrümmte Flächen umfasst. Im beschrieben Computermodell kann die Schutzumhausung durch ebene Begrenzungsflächen angenähert werden, wobei letztere nicht in jedem Fall senkrecht zueinander angeordnet sein müssen, sondern beispielsweise auch eine oktaederförmige Grundfläche aufweisen kann.

Zur Festlegung zumindest einer virtuellen Begrenzungsfläche im Computermodell kann vorgesehen sein, diese durch eine jeweilige zugeordnete ebene virtuelle Fläche anzunähern, welche sich zwischen Begrenzungskanten von Begrenzungswandungen bzw. -flächen des jeweiligen Öffnungsabschnittes erstreckt und so angeordnet wird, dass sie über einen möglichst großen Streckenabschnitt die Begrenzungskanten berührt. Um eine lückenlose Flächenabdeckung im Computermodel bereitzustellen, kann vorgesehen sein, dass zu den Begrenzungskanten kürzeste Abstandsstücke zu der ebenen virtuellen Fläche berechnet werden, sodass der Öffnungsabschnitt durch eine ebene Fläche mit sich anschließenden Verbindungsflächenabschnitten gebildet wird. Es kann auch vorgesehen sein, eine ebene Begrenzungsfläche oder eine Begrenzungsfläche, die im Computermodell durch eine ebene Begrenzungsfläche angenähert wird, durch Ausdehnung dieser Ebene in vorgegebene Richtungen zu erweitern und damit eine virtuelle Begrenzungsfläche festzulegen, die für weitere Ermittlungen bzw. Berechnungen, insbesondere für Berechnungen von Schnitt- bzw. Auftrefforten an im Computermodell festgelegten Flächen zugrunde zu legen.

Insofern kann vorgesehen sein, dass im Computermodell der Schutzumhausung zur Darstellung der Begrenzungsflächen und der zumindest einen virtuellen Begrenzungsfläche Ebenen durch ebene Begrenzungsflächen gelegt werden. Dabei kann vorgesehen sein, dass der Schritt des Ermittelns eines Schnittortes des von der Strahlquelle ausgehenden Strahls an der Schutzumhausung bzw. deren virtuellen Begrenzungsfläche(n) das Ermitteln eines aktuellen Schnittortes des von der Strahlquelle ausgehenden Strahls an einer der durch die Begrenzungsflächen verlaufenden Ebene umfasst.

Vorzugsweise kann vorgesehen sein, dass der Schritt b) des Ermittelns der Positionskoordinaten des Bezugspunktes auf der Grundlage bzw. in Abhängigkeit von Ansteuerwerten und/oder Positionswerten der Aktuatoren des Manipulators durchgeführt wird. Diese Ansteuerwerte bzw. Sensorwerte liegen zu jedem Zeitpunkt aufgrund der Steuerung des Manipulators vor, sodass diese gleichzeitig zur Durchführung des erfindungsgemäßen Verfahrens herangezogen werden können.

Um das erfindungsgemäße Verfahren zur Sicherheitssteuerung einer Strahlquelle, die an einem mehrachsigen Manipulator angeordnet und von diesem geführt bzw. bewegt ist, auch in Bezug auf die Bewegung der Strahlquelle zu verbessern, kann zweckmäßigerweise vorgesehen sein, dass vorbestimmte, sichere Ansteuerwerte und/oder Positionswerte der Aktuatoren des Manipulators gespeichert werden und diesbezügliche Ist-Werte mit diesen verglichen werden und bei Erkennen von aktuellen nichtsicheren Ansteuerwerten und/oder Positionswerten der Aktuatoren des Manipulators eine Sicherheitsfunktion ausgeführt wird, beispielsweise in Form einer Sicherheitsabschaltung des Manipulators.

Zweckmäßigerweise kann vorgesehen sein, dass der Schritt b) des Ermittelns von Positionskoordinaten des Bezugspunktes unter Ausführung einer Koordinatentransformation von Koordinaten des Bezugspunktes und der vorgegebenen Strahlausrichtung in einem Strahlquellen-bezogenen, mit der Strahlquelle mitbewegten Koordinatensystem in ein vorbestimmte Koordinatensystem, in welchem die Schutzumhausung ortsfest angeordnet sein kann, durchgeführt wird, sodass für die beschriebene Ermittlung des Schnittortes die jeweiligen Koordinaten im gleichen, vorgegebenen Koordinatensystem computerunterstützt durchgeführt werden kann.

In ähnlicher Weise kann vorgesehen sein, dass der Schritt c) des Ermittelns der Strahlausrichtung unter Ausführung einer Koordinatentransformation von Koordinaten der vorgegebenen Strahlausrichtung in einem Strahlquellen-bezogenen bzw. Manipulator-bezogenen Koordinatensystem in das vorbestimmte Koordinatensystem durchgeführt wird.

Wie obenstehend schon angegeben, kann je nach Ausführungsform die Ermittlung von Positionskoordinaten des vorbestimmten Bezugspunktes, die Ermittlung der Strahlausrichtung der Strahlquelle und/oder davon abhängig die Ermittlung eines Schnitt- bzw. Auftreffortes des am Strahlaustritt aus der Strahlquelle austretenden Strahls an einer Begrenzungsfläche der Schutzumhausung bzw. an einem Öffnungsabschnitt der Schutzumhausung sowie die Ermittlung eines Abstandes des ermittelten Schnitt- bzw. Auftreffortes zu einem vorbestimmten Referenzort der Strahlquelle in Bezug auf aktuelle Koordinaten, d.h. Momentan-Positionskoordinaten, in Bezug auf eine aktuelle Strahlrichtung, in Bezug auf den aktuellen Schnitt- bzw. Auftreffort und/oder in Bezug auf den aktuellen Abstand durchgeführt werden, d.h. in Bezug auf Ist-Werte der genannten Größen.

Um eine vorausschauende Sicherheitssteuerung bereitzustellen, welche schon vor dem Erreichen kritischer Betriebssituationen, bei welchen beispielsweise ein Strahl der Strahlquelle wie ein Laserstrahl mit schädigendem Charakter außerhalb der Schutzumhausung auftritt, zu vermeiden, kann zweckmäßigerweise vorgesehen sein, dass eine erste und/oder zweite zeitliche Ableitung des zeitlichen Verlaufs der ermittelten Positionskoordinaten des vorbestimmten Bezugspunktes und/oder der ermittelten Strahlrichtung der Strahlquelle durchgeführt wird zur Bereitstellung einer Prognose für zukünftige Schnitt- bzw. Auftreffpunkte an Begrenzungsflächen und/oder virtuellen Begrenzungsflächen der Schutzumhausung. Durch diese Weiterbildung ermöglicht die Erfindung die Strahlquelle zur Strahlnichtabgabe anzusteuern, bevor eine Ansteuersituation der Aktuatoren des Manipulators erreicht wird, die bei der Berücksichtigung von reinen Ist-Werten erst nach Erreichen der beschriebenen kritischen Betriebssituation zu einer Nichtfreigabe der Strahlquelle führen würde.

Insofern kann zweckmäßigerweise vorgesehen sein, dass die Schritte b) bis g) abhängig von zumindest einem prognostizierten Schnitt- bzw. Auftreffpunkt bzw. -ort an einer Begrenzungsfläche oder einer virtuellen Begrenzungsfläche der Schutzumhausung durchgeführt werden. Wie obenstehend beschrieben, können bei dem erfindungsgemäßen Verfahren die Schritte b) bis g) abhängig von zumindest einem aktuellen Schnitt- oder Auftreffpunkt an einer Begrenzungs- und/oder einer virtuellen Begrenzungsfläche der Schutzumhausung durchgeführt werden mit der Folge einer verzögerten Steuerung im Vergleich zu dem Verfahren mit prognostizierten Werten.

Um die beschriebene Funktion des erfindungsgemäßen Verfahrens zur Sicherheitssteuerung einer Strahlquelle über die gesamte Betriebsdauer bzw. die gesamte Ausführungszeit der Betriebsfunktion aufrechtzuerhalten, kann zweckmäßigerweise eine Überprüfung der Sicherheitssteuerung vorgesehen sein. Erfindungsgemäß können zur Überprüfung der Sicherheitssteuerung die Aktuatoren des Manipulators derart angesteuert werden, dass der Bezugspunkt Koordinaten eines vorgegebenen Prüfpunktpunktes einnimmt und die Strahlausrichtung eine vorgegebene Referenzausrichtung einnimmt. Diese Überprüfung kann nun so ausgeführt werden, dass eine zu den Prüfeinstellungen ausgerichtete Sensoreinrichtung angeordnet wird, die beim Empfang des von der Strahlquelle ausgegebenen Strahls ein Signal, insbesondere ein elektrisches Signal ausgibt, wobei die Signalhöhe beispielsweise von zumindest einem Strahlparameter abhängt. In solchen Ausführungsformen, bei welchen die Strahlquelle eine Lichtquelle wie eine Laserlichtquelle ist, kann beispielsweise als Sensoreinrichtung eine Fotozelle bzw. Fotodiode oder auch bei niedrigen Lichtintensitäten der Strahlquelle eine CCD-Kamera eingesetzt werden. Liegt das Sensorsignal bei der Überprüfung der Sicherheitssteuerung innerhalb eines vorgegebenen Wertebereichs, kann dies als Indiz angesehen werden, dass die Sicherheitssteuerung funktionstüchtig ist. Sollte jedoch das Sensorsignal außerhalb eines vorgegebenen Bereichs liegen, kann dies als Indiz dafür angesehen werden, dass die Sicherheitssteuerung fehlerhaft arbeitet, sodass erfindungsgemäß beispielsweise eine Sicherheitsfunktion ausgeführt wird, insbesondere eine Abschaltung des gesamten Systems. Eine derartige Überprüfung kann erfindungsgemäß nach einem vorgegebenen Überprüfungszyklus durchgeführt werden.

Um insbesondere in solchen Betriebssituationen, bei welchen die Strahlquelle eine Laserschweißquelle ist, eine Schädigung der Schutzumhausung zu vermeiden, kann erfindungsgemäß vorgesehen sein, dass eine Zeitdauer erfasst wird, innerhalb welcher der Auftreffort des Strahls an einer Begrenzungsfläche der Schutzumhausung im Wesentlichen unveränderlich bleibt, wobei ein Nichtfreigabesignal zur Steuerung einer Nichtabgabe des Strahls erzeugt wird, wenn die Zeitdauer eine vorgegebene Zeitschwelle erreicht oder überschreitet. Insbesondere in solchen Ausführungsformen, bei welchen Ebenen durch Begrenzungsflächen zur Festlegung von virtuellen Begrenzungsflächen, d.h. zur Festlegung von Öffnungsabschnitten der Schutzumhausung im Computermodel der Schutzumhausung gelegt werden, kann der Schritt d) zur Ermittlung zumindest eines Schnittortes jeweils einen Schnittort an mehreren, insbesondere zwei unterschiedlichen virtuellen Begrenzungsflächen ergeben. Bei einer solchen Konstellation kann vorgesehen sein, dass für die mehreren, insbesondere für beide Auftrefforte der jeweilige Abstand zum Referenzort der Strahlungsquelle ermittelt wird, und ein Freigabesignal nur abgegeben wird, wenn die zumindest zwei Abstände alle größer als die vorgegebene Abstandsschwelle sind.

Die obenstehend angegebene erfindungsgemäße Aufgabe wird darüber hinaus gelöst durch ein System gemäß Anspruch 15.

Je nach Ausführungsform kann die Vorrichtung zur Sicherheitssteuerung der Strahlquelle als Teil oder Abschnitt einer Steuereinrichtung zum Ansteuern der Aktuatoren des Manipulators und zum Ansteuern der Strahlquelle ausgebildet sein. Die Vorrichtung kann insbesondere als Controller ausgebildet sein mit Speichermittel zur Abspeicherung des Computermodells der Schutzumhausung und/oder vorgegebener sicherer Ansteuerwerte bzw. Positionsdaten der Aktuatoren des Manipulators, Ein-/Ausgabemittel zur Erfassung von Ansteuerwerten bzw. Positionsdaten der Aktuatoren des Manipulators und zur Abgabe eines Steuersignals zur Freigabe/Nichtfreigabe eines Strahls der Strahlquelle sowie Berechnungsmittel, insbesondere in Form mindestens eines Mikroprozessors zur Berechnung von Positionskoordinaten eines Bezugspunktes des Manipulators oder der Strahlquelle und/oder zur Berechnung der Strahlausrichtung des Strahls sowie des zumindest einen Schnitt- bzw. Auftreffortes des Strahl an Grenzflächen und/oder virtuellen Grenzflächen der Schutzumhausung sowie zur Berechnung des Abstandes zwischen dem zumindest einen Schnitt- bzw. Auftreffort und einem vorgegebenen Punkt der Strahlquelle, insbesondere Strahlaustritt. In einer Ausführungsform kann die Vorrichtung den Manipulator, insbesondere einen Roboter umfassen, welcher die an diesem befestigte Strahlquelle, insbesondere eine Laserlichtquelle wie einen Laserscanner oder eine Laserschweißquelle führt bzw. bewegt sowie eine Steuereinrichtung, insbesondere in Form des oben beschriebenen Controllers, zur Durchführung des beschriebenen erfindungsgemäßen Verfahrens.

Die Erfindung wird im Folgenden durch Beschreiben einer Ausführungsform nebst Abwandlungen des erfindungsgemäßen Verfahrens bzw. einer hierzu eingerichteten Vorrichtung unter Bezugnahme auf die beiliegenden Zeichnungen erläutert, wobei
- Figur 1: in einer perspektivischen Ansicht eine beispielhafte Schutzumhausung zur Durchführung des erfindungsgemäßen Verfahrens in einer Prinzipdarstellung,
- Figur 2: eine Prinzipskizze eines Manipulators mit daran befestigter Strahlquelle zur Durchführung des erfindungsgemäßen Verfahrens,
- Figur 3: ein Ablaufdiagramm zur Durchführung des erfindungsgemäßen Verfahrens;
- Figur 4: eine Skizze zur Beschreibung des Schrittes d) zur Ermittlung eines Schnittpunktes eines Strahls aus einer von dem Manipulator getragenen Strahlquelle mit einer Begrenzungsfläche,
- Figur 5: eine Skizze zur Erläuterung des Schrittes d) zur Ermittlung des Schnittpunktes mit Bezug auf die Schutzumhausung der Figur 1 und
- Figur 6: eine Betriebssituation zur Überprüfung der Sicherheitssteuerung mittels eines Prüfsensors zeigt.

Das erfindungsgemäße Verfahren bzw. die erfindungsgemäße Vorrichtung wird im Folgenden mit Bezug auf eine erfindungsgemäße Sicherheitssteuerung eines Laserscanners beschrieben, der zum Abscannen einer Schweißfuge an Werkstücken eingerichtet und an einem mehrachsigen Manipulator angeordnet ist und von diesem innerhalb einer Schutzumhausung zur Ausführung der Fugenabtastung bewegt wird. Eine solche Fugenabtastung kann beispielsweise als Vorbereitungsschritt für eine nachfolgende Roboter-unterstützte Schweißnahterstellung durchgeführt werden, wobei diese Schweißung wiederum durch prinzipiell alle bekannten Schweißverfahren realisiert werden kann, insbesondere Lichtbogenschweißen oder Laserschwei-ßen. Ohne darauf näher einzugehen, sei betont, dass das erfindungsgemäße Verfahren auch zur Sicherheitssteuerung anderer, von einem Manipulator bewegten Strahlquellen angewendet werden kann, beispielsweise bei einer bewegten Wasserstrahlquelle zum Wasserstrahlschneiden. In einer weiteren Ausführungsform kann die Strahlquelle beispielsweise als Laserstrahlschweißquelle, insbesondere für einen Fertigungsprozess nach EN ISO 4063, verwendet werden. Auch zu diesem Zweck eignet sich das erfindungsgemäße Verfahren.

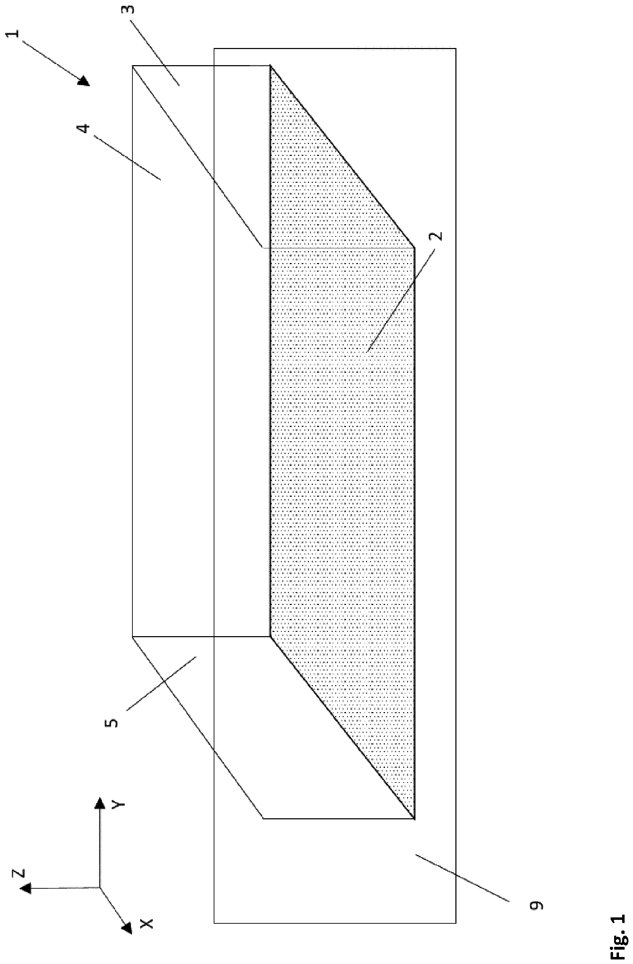

Figur 1 zeigt in einer Prinzipskizze eine einfache Ausführungsform einer Schutzumhausung in Form eines in vertikaler Richtung +Z offenen, hier quaderförmigen Raumes mit einer Bodenfläche 2 und drei Seitenflächen 3, 4, 5, die in der beschriebenen Ausführungsform jeweils senkrecht zueinander angeordnet sind. Erkennbar weist die angegebene Schutzumhausung keine vordere Seitenwandung und keine Dachabdeckung auf, sodass vom Laserscanner ausgehende Lichtstrahlen, soweit sie nicht auf die angegebenen Begrenzungsflächen 2 - 5 auftreffen, die Schutzumhausung verlassen. Es versteht sich, dass das erfindungsgemäße Verfahren auch mit anderen Schutzumhausungen ausführbar ist, insbesondere mit in ihrer Gestaltung komplexeren Umhausungen, die beispielsweise nichtebene Grenzflächen aufweisen können und darüber hinaus Grenzflächen, bei welchen aufeinandertreffende Grenzflächen nicht in jedem Fall senkrechte Winkel bilden müssen. Darüber hinaus ist das erfindungsgemäße Verfahren auch und insbesondere auf Schutzumhausungen anwendbar, bei welchen innerhalb der Seitenflächen Öffnungen angeordnet sind, beispielsweise Fenster und/oder Tore. In einem vorgegebenen Koordinatensystem (X,Y,Z) kann die Schutzbehausung 1 als Computermodell mit einem Datensatz zur datentechnischen Festlegung der Begrenzungsflächen, hier der Bodenfläche und den 3 Seitenflächen beschrieben bzw. festgelegt werden, wobei einem jeweiligen Öffnungsabschnitt der Schutzumhausung zumindest eine virtuelle Begrenzungsfläche in Datensatz datentechnisch zugeordnet werden kann. Letzteres bedeutet, dass eine solche virtuelle Begrenzungsfläche im Computermodell bzw. dem Datensatz als Fläche der Schutzumhausung festgelegt und von den realen Grenzflächen 2 - 5 der Schutzumhausung unterscheidbar ist. In Fig. 1 ist eine solche virtuelle Grenzfläche bzw. Ebene 9 im Öffnungsabschnitt dargestellt, auf der Grundlage dessen erfindungsgemäße Schnittpunkte im Öffnungsabschnitt berechnet werden können zur Durchführung des erfindungsgemäßen Verfahrens.

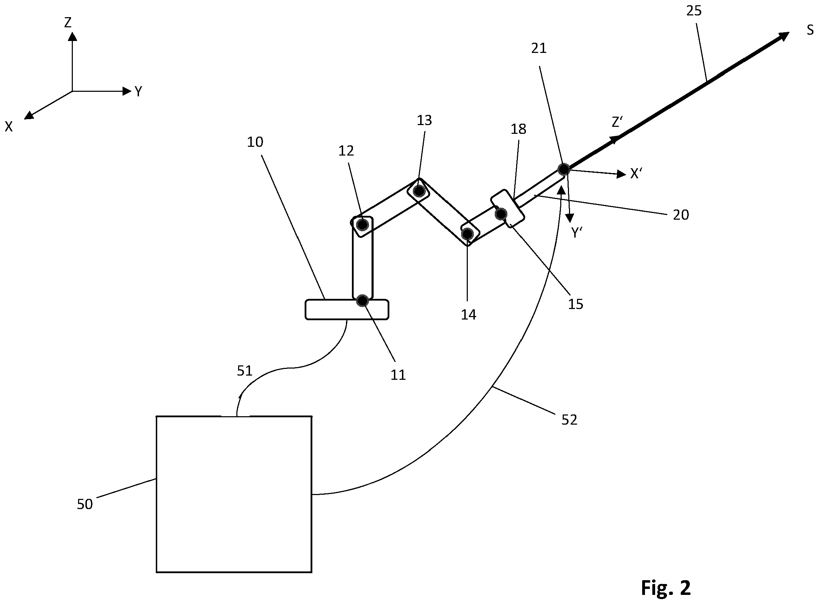

Innerhalb der Schutzumhausung 1 kann zur Durchführung des erfindungsgemäßen Verfahrens ein Manipulator angeordnet sein, siehe Fig. 2. Die Figur zeigt einen als Industrieroboter 10 ausgebildeten Manipulator, der hier fünf Achsen und entsprechende Aktuatoreinrichtungen 11 - 15 aufweist, an dessen Befestigungsflansch an einem Anflanschpunkt bzw. Referenzpunkt 18 der Laserscanner 20 befestigt ist. Es sei bemerkt, dass der Roboter zur Ausführung des erfindungsgemäßen Verfahrens auch mehr Achsen, z.B. 7 oder noch mehr Achsen aufweisen kann, angepasst an die jeweilige Arbeitsaufgabe. Die Achsen bzw. die Aktuatoren des Roboters 10 werden in der beschriebenen Ausführungsform von einer zentralen Steuereinrichtung 50 über eine diesbezügliche Steuerleitung 51 gesteuert, die je nach Ausführungsform auch als Steuerbus ausgebildet sein kann. In der beschriebenen Ausführungsform wird der Laserscanner 20 auch über die zentrale Steuereinrichtung 50 gesteuert mittels einer Steuerleitung 52, welche wiederum als Steuerbus ausgebildet sein kann. In einer besonders zweckmäßigen Ausführungsform kann auch vorgesehen sein, dass sowohl die Aktuatoren des Industrieroboters 10 als auch der Laserscanner 20 an einem einzelnen, gemeinsamen Steuerbus angeschlossen sind. Der Laserscanner zur Abtastung einer in der Figur nicht angegebenen Schweißfuge kann in der beschriebenen Ausführungsform als Laserdiode ausgebildet sein mit einer Wellenlänge von 660 nm, einem Strahldurchmesser von unter 1 mm am Laseraustrittsort, einer Strahldivergenz von unter 1 mrad sowie einer Leistung von etwa 40 mW. Dieser beispielhafte Laserscanner weist einen sogenannten NOHD (Nominal Ocular Hazard Distance) von 6,5 m auf, sodass beim Betrieb dieses beispielhaften Laserscanners beachtet werden muss, dass vom Laserscanner emittierte Strahlung erst ab einer Entfernung von mehr als 6,5 m unkontrolliert auf die Umgebung auftreffen darf, um Schädigungen auszuschlie-ßen. Es sei bemerkt, dass bei der Verwendung von Laserstrahlschweißquellen, deren Leistung ohne weiteres im Bereich von mehreren hundert Watt oder gar im Kilowatt-Bereich liegen kann, NOHD-Werte von mehreren hundert Metern oder noch mehr aufweisen können, sodass beim Betrieb einer solchen Laserstrahlschweißquelle in jedem Fall sichergestellt sein muss, dass derartige Strahlung nicht die jeweilige Schutzumhausung verlässt.

In Figur 2 ist am Laseraustrittsort 21 des Laserscanners 20 ein zweckmäßiges Koordinatensystem der Strahlquelle angegeben, bei welchem die Strahlrichtung S parallel zur Z`-Achse des Koordinatensystems verläuft. In der Figur ist auch ein mit Bezug auf Figur 1 angegebenes vorbestimmtes, ortsfestes Koordinatensystem mit den Koordinaten X, Y und Z angegeben. Demgegenüber bewegt sich das Koordinatensystem (X', Y', Z`) der Strahlquelle mit dieser mit, sodass zur Bestimmung des Referenzpunktes 18 des Manipulators bzw. des Laseraustrittspunktes 21 sowie der zugeordneten Strahlrichtung des Laserstrahls 25 im ruhenden Koordinatensystem eine Koordinatentransformation der Koordinaten dieser Punkte bzw. der Richtung des Strahls im Koordinatensystem (X', Y', Z`) in das ruhende Koordinatensystem (X, Y, Z) durchgeführt werden kann, um das nachfolgend mit Bezug auf die Figuren beschriebene erfindungsgemäße Verfahren auszuführen.

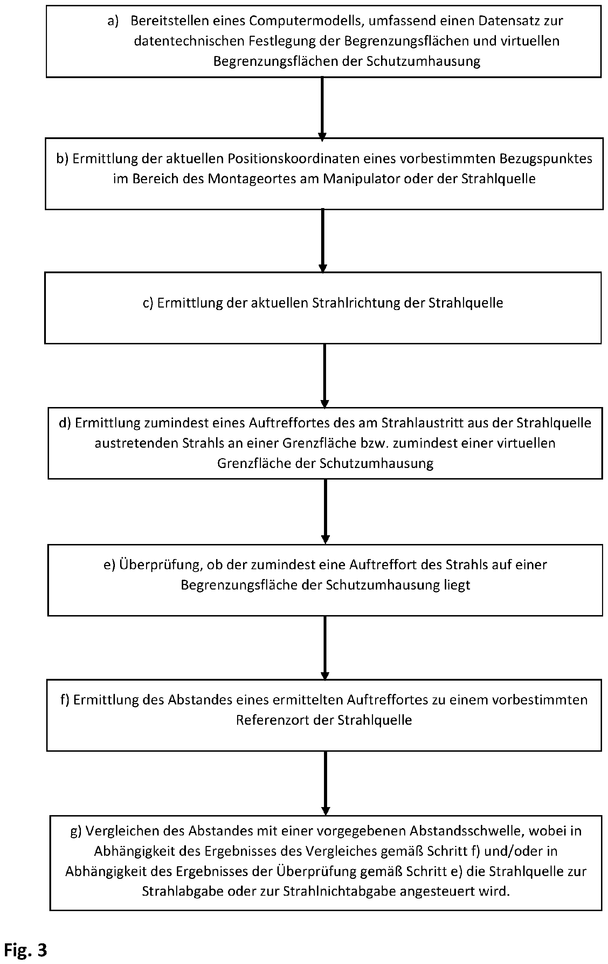

Figur 3 zeigt ein Ablaufdiagramm des erfindungsgemäßen Verfahrens zur Sicherheitssteuerung einer Strahlquelle, hier eines Laserscanners, der an einem Industrieroboter angeordnet und von diesem innerhalb einer nicht vollständig geschlossenen Schutzumhausung zur Ausführung einer Schweißfugenabtastung bewegt wird, wobei der Laserscanner an einem vorgegebenen Montageort, hier einem Montageflansch und mit einer vorgegebenen Strahlausrichtung am Industrieroboter befestigt ist. Das erfindungsgemäße Verfahren umfasst zunächst in Schritt a) das Bereitstellen eines Computermodells, umfassend einen Datensatz zur datentechnischen Festlegung von Begrenzungsflächen der Schutzumhausung in einem vorgegebenen Koordinatensystem, wobei in einem Öffnungsabschnitt der Schutzumhausung zumindest eine virtuelle Begrenzungsfläche im Datensatz datentechnisch zugeordnet wird. Bei der Festlegung des Datensatzes kann vorgesehen sein, Begrenzungsflächen und virtuelle Begrenzungsflächen durch jeweilige ebene Flächen bzw. Flächenabschnitte anzunähern bzw. darzustellen. Zur datentechnischen Festlegung von virtuellen Begrenzungsflächen im Bereich von Öffnungsabschnitten der Schutzumhausung kann auch vorgesehen sein, eine ebene Begrenzungsfläche oder eine durch einen ebenen Abschnitt angenäherte Begrenzungsfläche in einer oder mehreren Koordinaten zu erweitern, insbesondere in Bezug auf ihre Höhe (s. Fig. 1: in Z-Richtung), sodass die so festgelegte virtuelle Begrenzungsfläche nachfolgend für weitere Bestimmungen zur Verfügung stehen. Beispielsweise kann durch datentechnisches Anlegen einer Ebene an eine ebene Seitenfläche ein Öffnungsabschnitt der Schutzumhausung mit einer virtuellen Begrenzungsfläche "belegt" bzw. diese festgelegt werden, auf der Grundlage dessen die untenstehend angegebenen weiteren erfindungsgemäßen Verfahrensschritte ausgeführt werden können. Hierdurch kann beispielsweise bei einer vergleichsweise niedrigen Seitenwandfläche eine parallele, sich in vertikaler Richtung anschließende und parallel verlaufende virtuelle Begrenzungsfläche festgelegt werden. Dabei kann letztlich für alle Seitenflächen der Schutzumhausung wie beschrieben vorgegangen werden, wobei die Vertikalerstreckung einer so ermittelten virtuellen Begrenzungsfläche anwenderabhängig eingestellt werden kann. Darüber hinaus kann auch vorgesehen sein, im Computermodell eine virtuelle, insbesondere ebene virtuelle Begrenzungsfläche als Deckenfläche vorzusehen, die sich beispielsweise parallel zur Bodenfläche der Schutzumhausung erstrecken kann. Damit kann das Computermodell zur Beschreibung der Schutzumhausung einen Datensatz aufweisen, um die Schutzumhausung durch Festlegung der Begrenzungsflächen und zumindest einer virtuellen Begrenzungsfläche datentechnisch als virtuell geschlossene Schutzumhausung zu beschreiben, was in dieser Ausführungsform eine voll umfängliche Sicherheitssteuerung der Strahlquelle ermöglicht. Es sei jedoch betont, dass zur Umsetzung des erfindungsgemäßen Verfahrens die datentechnische Beschreibung der Schutzumhausung nicht in jedem Fall eine "virtuell geschlossene" Schutzumhausung umfassen muss, sondern wie im vorliegenden Beispiel beschrieben, nicht "virtuell geschlossen" sein kann.

Schritt b) im Ablaufdiagramm der Figur 3 umfasst das Ermitteln von Positionskoordinaten eines vorbestimmten Bezugspunktes im Bereich des Montageortes am Manipulator oder der Strahlquelle. In einer ersten Ausführungsform kann das erfindungsgemäße Verfahren in Bezug auf aktuelle Werte, d.h. hier in Bezug auf aktuelle Positionskoordinaten durchgeführt werden. Die aktuellen Positionskoordinaten des vorbestimmten Bezugspunktes sind in der beschriebenen Ausführungsform die Koordinaten des Anflanschpunkts 18 des Laserscanners 20. In einer anderen Ausführungsform kann auch vorgesehen sein als Bezugspunkt den Laseraustrittspunkt 21 des Laserscanners 20 heranzuziehen. Wie der Fachmann erkennt, können auch andere zweckmäßige Punkte am Manipulator und/oder der Strahlquelle als Bezugspunkt herangezogen werden, um die Bewegung und die Orientierung des Manipulators und damit der Strahlquelle bei der Ausführung der Betriebsfunktion, hier der Fugenabtastung festzulegen.

In Schritt c) des Ablaufdiagramms der Figur 3 wird die aktuelle Strahlrichtung der Strahlquelle unter Berücksichtigung der ermittelten Positionskoordinaten des Bezugspunktes und der vorgegebenen Strahlausrichtung der Strahlquelle ermittelt.

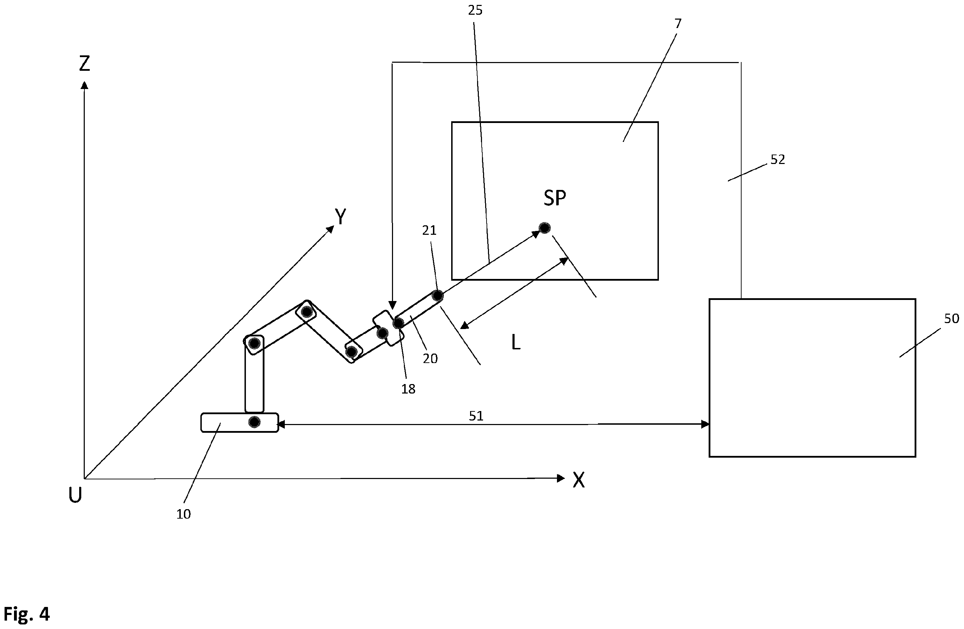

Mit Bezug auf Figur 4 werden nun die Schritte d), e) und f) des Ablaufdiagramms der Figur 3 erläutert. Figur 4 zeigt entsprechend der Darstellung der Figur 2 den Industrieroboter 10 mit daran am Anflanschpunkt 18 angeflanschtem Laserscanner 20, der an dessen Austrittspunkt 21 einen Laserstrahl 25 mit vorgegebener Strahlrichtung abgibt. Der Strahl 25 fällt auf eine Begrenzungsfläche 7 der Schutzumhausung, siehe Figur 1, und schneidet die Begrenzungsfläche 7 in einem Schnittpunkt SP. Figur 4 gibt insofern eine Momentanaufnahme bei der Fugenabtastung des Lasers wieder, bei welcher der Laserscanner in der gezeigten Betriebssituation nicht auf die Schweißfuge gerichtet ist, sondern auf eine Begrenzungsfläche der Schutzumhausung. Eine solche Betriebssituation kann sich beispielsweise während einer Fugenabtastung einstellen, wenn der Manipulator aufgrund eines abrupten Richtungswechsels der Fuge selbst nicht mehr auf die Schweißfuge bzw. das Werkstück gerichtet ist, sondern daran vorbeistrahlt und nachgeführt werden muss.

Ergibt eine Überprüfung, dass der Auftreffort auf einer Begrenzungsfläche der Schutzumhausung liegt, kann in einer Ausführungsform schon zu diesem Zeitpunkt ein Freigabesignal zur Ausgabe des Strahls ausgegeben werden, Schritt e). Ergibt jedoch die Prüfung des Schrittes e), dass der Auftreffort auf einer virtuellen Begrenzungsfläche der Schutzumhausung trifft, muss in der beschriebenen Ausführungsform Schritt f) durchgeführt werden, d.h. es erfolgt nach der Ermittlung des Schnittortes bzw. Schnittpunktes SP die Ermittlung des aktuellen Abstandes L des ermittelten Schnittortes zu einem vorbestimmten Referenzort der Strahlquelle, insbesondere zum Laseraustrittspunkt 21 durch Berechnung auf der Grundlage der bekannten Koordinaten des Referenzortes der Strahlquelle, d.h. hier des Laseraustrittspunktes und der Lage der Begrenzungsfläche der Schutzumhausung, wobei diese Begrenzungsfläche wie obenstehend angegeben im Computermodell hier entweder eine reale Seitenfläche (Begrenzungsfläche) oder eine virtuelle Begrenzungsfläche sein kann. Wie der Fachmann erkennt, wird in der beschriebenen Ausführungsform die Ermittlung des Abstandes L im gleichen Koordinatensystem, hier dem ortsfesten Koordinatensystem (X, Y, Z) durchgeführt, sodass je nach Ausführungsform unter Umständen eine Koordinatentransformation der Koordinaten des mitbewegten Koordinatensystems der Strahlquelle bzw. des Roboters in das ortsfeste Koordinatensystem durchgeführt wird.

In der beschriebenen Ausführungsform weist die Strahlung des Laserscanners einen nominellen Augen-Gefahrenabstand von 6,5 m auf, der somit den Gefahrenbereich festlegt, innerhalb dessen bei direktem Blick in den Laserstrahl Gesundheitsschäden am Auge zu befürchten sind. Im Schritt g) des Ablaufdiagramms der Figur 3 wird nun der ermittelte Abstand L zwischen dem Laseraustrittsort 21 und dem Schnittort an der Begrenzungsfläche der Schutzumhausung verglichen mit der vorgegebenen Abstandsschwelle, d.h. in der beschriebenen Ausführungsform, mit dem NOHD-Wert. In Abhängigkeit des Vergleiches wird erfindungsgemäß dann der Laserscanner zur Laserstrahlabgabe oder zur Laserstrahlnichtabgabe angesteuert. Insbesondere kann vorgesehen sein, dass der Laserscanner zur Strahlabgabe angesteuert wird, wenn der ermittelte Abstand zwischen Laseraustrittsort 21 und Schnittort SP größer ist als der NOHD-Wert oder wenn der ermittelte Schnittort auf einer realen Begrenzungsfläche der Schutzumhausung liegt, d.h. nicht auf einer virtuellen Begrenzungsfläche. Wie obenstehend erläutert, kann bei Vorliegen der letztgenannten Bedingung schon nach Schritt e) der Laserscanner zur Strahlabgabe angesteuert werden. Dagegen kann in der beschriebenen Ausführungsform die Strahlquelle zum Nichtstrahlen angesteuert werden, wenn der ermittelte Abstand L kleiner ist als die vorgegebene Abstandsschwelle NOHD und gleichzeitig der ermittelte Schnitt- bzw. Auftreffort SP auf einer virtuellen Begrenzungsfläche der Schutzumhausung liegt.

Vorzugsweise kann vorgesehen sein, dass die beschriebene Verfahrensschrittensequenz b) bis g) während der Durchführung einer Betriebsfunktion, hier der Schweißfugenabtastung des Laserscanners, kontinuierlich, U.U. mit vorgegebener zeitlicher Beabstandung durchgeführt wird, um sicherzustellen, dass eine Gefährdungssituation erkannt und daraufhin die Strahlquelle, hier der Laserscanner, zur Strahlnichtabgabe angesteuert wird. Bei der Ausführungsform des erfindungsgemäßen Verfahrens entsprechend den in Figur 3 angegebenen Verfahrensschritten kann in einer weiteren Ausführungsform nicht von Ist- bzw. aktuellen Schnittorten bzw. Abständen ausgegangen werden, sondern von prognostizierten, sodass das Verfahren dann eingerichtet ist, dass schon vor Erreichen einer Betriebssituation mit Gefährdungspotential diese erkannt wird und die Strahlquelle, hier der Laserscanner, vor Erreichen dieser Betriebssituation abgeschaltet wird. Zu diesem Zweck kann vorgesehen sein, eine erste und/oder zweite zeitliche Ableitung des zeitlichen Verlaufs der ermittelten Positionskoordinaten des vorbestimmten Bezugspunktes und/oder der ermittelten Strahlrichtung der Strahlquelle durchzuführen zur Bereitstellung einer Prognose für zukünftige Schnittpunkte an Begrenzungs- und/oder virtuellen Begrenzungsflächen der Schutzumhausung.

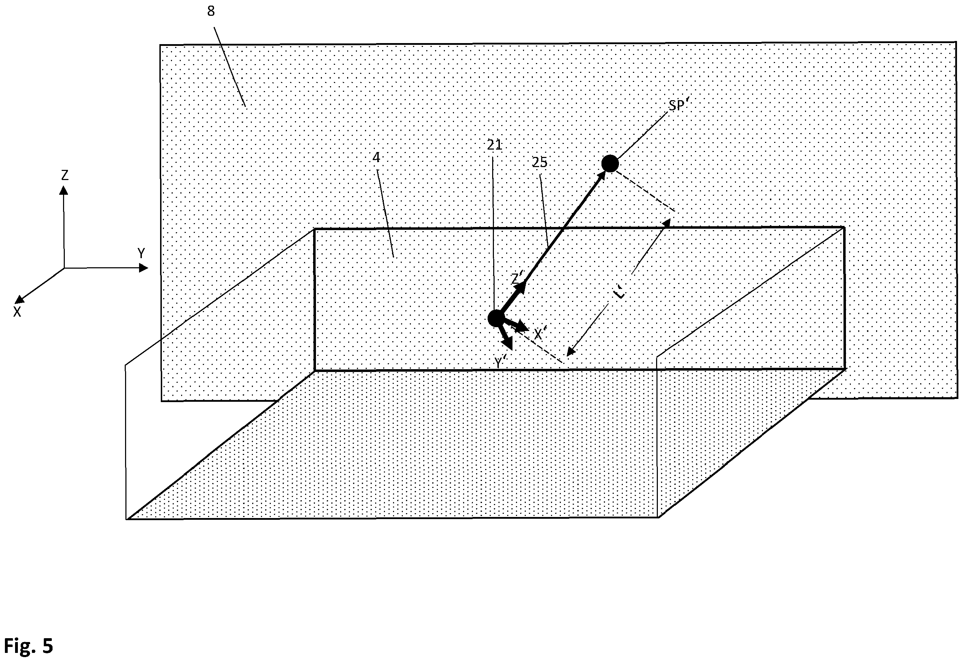

Figur 5 zeigt ein Beispiel für die datentechnische Festlegung einer virtuellen Begrenzungsfläche im Datensatz des Computermodells für die vorstehend beschriebenen Berechnungen bzw. Ermittlungen. Die Figur 5 zeigt die Schutzumhausung 1, wobei eine Ebene 8 durch die Rückseitenfläche 4 gelegt wird, um in diesem Bereich eine virtuelle Begrenzungsfläche zu definieren, welche insbesondere in z-Richtung über die Rückseitenbegrenzungsfläche 4 hinausgeht. Die Ebene 8 stellt insofern innerhalb der Rückseitenfläche 4 eine Begrenzungsfläche dar, während sie außerhalb der Rückseitenfläche 4 eine virtuelle Begrenzungsfläche im Sinne der vorliegenden Anmeldung darstellt. In der in Figur 5 angegebenen Betriebssituation ist das ortsfeste Koordinatensystem (X, Y, Z) und das hier am Laseraustrittspunkt 21 angeordnete Koordinatensystem (X', Y', Z`), das mit der Strahlquelle relativ zur Schutzumhausung bewegt wird, angegeben. Die Darstellung zeigt eine Betriebssituation, bei welcher der Strahl 25 auf die virtuelle Begrenzungsfläche fällt, sodass der Schnittpunkt SP` durch die reale Schutzumhausung nicht geblockt wird, sodass mit dem beschriebenen erfindungsgemäßen Verfahren zur Sicherheitssteuerung einer Strahlquelle sichergestellt ist, dass keine unzulässige Strahlung die Schutzumhausung verlässt. In der Betriebssituation der Figur 5 erfolgt demnach nach der Ermittlung, d.h. der Berechnung des Schnittpunktes SP` gemäß Schritt g) der Fig. 3 eine Überprüfung, ob der Abstand L' größer ist als der NOHD-Wert, bejahendenfalls wird der Laserscanner zur Laserstrahlabgabe angesteuert, andernfalls zur Laserstrahl-Nichtabgabe angesteuert. In gleicher Weise, wie für den Schnittpunkt SP` der Figur 5 beschrieben, kann erfindungsgemäß bei einem eventuell vorliegenden Schnittpunkt des Strahls mit der virtuellen Fläche 9 im Öffnungsbereich der Schutzumhausung der Fig. 1 verfahren werden.

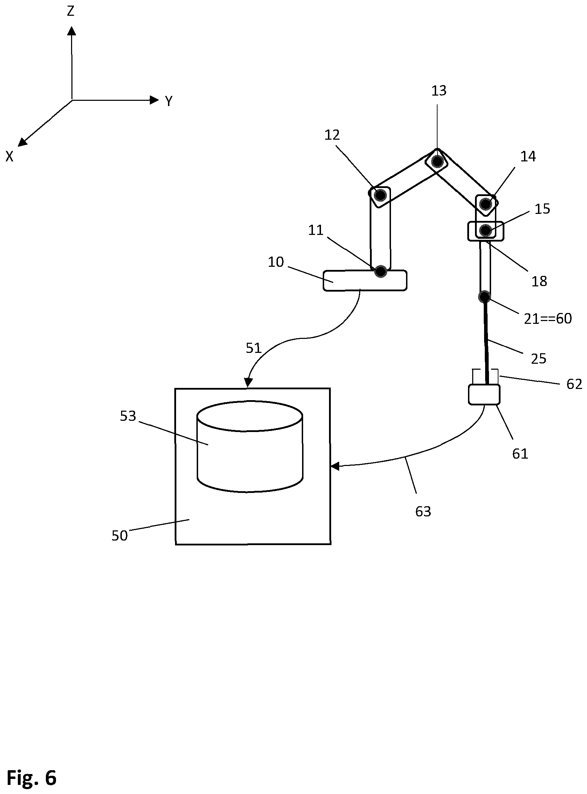

Um sicherzustellen, dass das erfindungsgemäße Verfahren, das auf der Grundlage des angegebenen Datensatzes zur datentechnischen Festlegung der Schutzumhausung und der Erfassung der Bewegung des Manipulators bzw. der Strahlquelle durchgeführt wird, mit der Realität übereinstimmende Schlussfolgerungen erzeugt, kann vorgesehen sein, eine regelmäßige Überprüfung bzw. einen regelmäßigen Abgleich mit einer realen Prüfposition, die sich insbesondere innerhalb der Schutzumhausung befinden kann, durchzuführen. Dabei können die Aktuatoren des Manipulators mit vorbestimmten Ansteuerwerten bzw. Parametern angesteuert werden, dass ein Bezugspunkt, beispielsweise der Strahlaustrittspunkt 21 des Manipulators mit daran befestigter Strahlquelle angesteuert wird, um einen vorgegebenen Prüfpunkt bzw. -ort 60 anzufahren, siehe Figur 6. Die diesbezüglichen Ansteuerwerte für die jeweiligen Aktuatoren 11 - 15 können dabei in einer Speichereinrichtung 53 der Steuereinrichtung 50 abgelegt sein. Zur Erfassung der Lage des vom Roboter gehaltenen Laserscanners 20 ist ein Sensor in Form einer Fotodiode 61 angeordnet, der das vom Laserscanner ausgesendete Licht empfängt bei genauer Ausrichtung des Laserscanners 20 zum Sensor. Um den Abgleich effizient zu gestalten, weist der Sensor in der beschriebenen Ausführungsform beabstandet zur eigentlichen Sensorfläche eine optische Blende 62 auf, deren Öffnungsdurchmesser an den Strahldurchmesser des Laserscanners angepasst ist. Durch diese konstruktive Maßnahme kann die Empfindlichkeit der Prüfung wesentlich erhöht werden, da sich eine geringfügige Deplatzierung der Strahlquelle zum vorgegebenen Referenzpunkt 60 oder Verkippung der Strahlquelle zur vorgegebenen Strahlausrichtung stark im Signal der Fotodiode 61 widerspiegelt. Die Steuereinrichtung 50 erfasst das jeweilige Signal des Sensors 61 über die Sensorleitung 63.

Wie der Fachmann erkennt, kann das erfindungsgemäße Verfahren zur Sicherheitssteuerung einer Strahlquelle mittels einer eigenständigen Steuereinrichtung ausgeführt werden, die die zur Durchführung des erfindungsgemäßen Verfahrens notwendigen Informationen von der Steuereinrichtung des Manipulators erhält. Darüber hinaus ist in dieser Ausführungsform die eigenständige Steuereinrichtung zum Ansteuern der Strahlquelle mit dieser bzw. mit deren Steuereinrichtung verbunden. In einer besonders zweckmäßigen Ausführungsform der Erfindung kann jedoch eine zentrale Steuereinrichtung vorgesehen sein, welche sowohl den Manipulator, die Betriebsfunktion der Strahlquelle bzw. die Strahlungsquelle, als auch die erfindungsgemäße Sicherheitssteuerung der Strahlquelle steuert.

### Bezugszeichenliste

- 1: Schutzumhausung
- 2: Bodenfläche, Begrenzungsfläche
- 3, 4, 5,: Seitenfläche, Begrenzungsfläche
- 7: Begrenzungsfläche
- 8: Virtuelle Begrenzungsebene, Virtuelle Begrenzungsfläche
- 9: Virtuelle Öffnungsebene, Virtuelle Begrenzungsfläche
- 10: Manipulator, Roboter
- 11 - 15: Achsen / Aktuator
- 18: Bezugspunkt /Bezugsort Anflanschpunkt
- 20: Strahlquelle, Laserscanner
- 21: Laseraustrittspunkt, Referenzpunkt, Referenzort
- 25: Laserstrahl
- 50: Steuereinrichtung
- 51: Steuerleitung
- 52: Steuerleitung
- 53: Speichereinrichtung
- 60: Prüfpunkt/Prüfort des Abgleichs
- 61: Fotodiode, Sensor, Sensoreinrichtung
- 62: Blende
- 63: Signalleitung
- E: Grenzfläche
- L, L': Abstand
- S: Laserstrahl
- SP: Schnittpunkt/Auftreffort
- SP`: Schnittpunkt/Auftreffort
- (X;Y;Z): Vorgegebenes, Schutzumhausung-bezogenes Koordinatensystem
- (X`;Y`;Z`): Roboter-bezogenes bzw. Strahlquellen-bezogenes Koordinatensystem

## Patentansprüche

1. Verfahren zur Sicherheitssteuerung einer Strahlquelle (20) wie einer Laserlichtquelle, die an einem mehrachsigen Manipulator (10) angeordnet und von diesem innerhalb einer nicht vollständig geschlossenen Schutzumhausung (1) zur Ausführung einer Betriebsfunktion bewegt wird, wobei die Strahlquelle (20) an einem vorgegebenen Montageort und mit einer vorgegebenen Strahlausrichtung am Manipulator (10) befestigt ist,
umfassend die Schritte
a) Bereitstellen eines Computermodells umfassend einen Datensatz zur Festlegung von Begrenzungsflächen (2, 3, 4, 5, 7) der Schutzumhausung (1), wobei einem Öffnungsabschnitt der Schutzumhausung (1) zumindest eine virtuelle Begrenzungsfläche (8, 9) zugeordnet wird;
b) Ermittlung von Positionskoordinaten eines vorbestimmten Bezugspunktes (18) im Bereich des Montageortes am Manipulators (10) oder der Strahlquelle(20), insbesondere eines Anflanschortes oder eines Strahlaustrittsortes der Strahlquelle (20);
c) Ermittlung der Strahlrichtung der Strahlquelle unter Berücksichtigung der ermittelten Positionskoordinaten des Bezugspunktes (18) und der vorgegebenen Strahlausrichtung der Strahlquelle;
d) Ermittlung eines Auftreffortes (SP, SP`) des am Strahlaustritt aus der Strahlquelle (20) austretenden Strahls an zumindest einer Begrenzungsfläche (2, 3, 4, 5, 7) der Schutzumhausung (1) bzw. an zumindest einer virtuellen Begrenzungsfläche (8, 9);
e) Überprüfung, ob der Auftreffort (SP, SP`) des Strahls auf einer Begrenzungsfläche (7) der Schutzumhausung (1) liegt;
f) Ermittlung des Abstandes (L, L') des ermittelten Auftreffortes (SP, SP`) zu einem vorbestimmten Referenzort (21) der Strahlquelle (20), insbesondere zu dem Strahlaustrittsort (21) des Strahls an der Strahlquelle (20) ;
g) Vergleichen des Abstandes (L, L') mit einer vorgegebenen Abstandsschwelle, wobei ein Freigabesignal oder Nichtfreigabesignal in Abhängigkeit des Ergebnisses des Vergleiches gemäß Schritt f) und/oder in Abhängigkeit des Ergebnisses der Überprüfung gemäß Schritt e) ausgegeben wird, um die Strahlquelle (20) zur Strahlabgabe oder zum Nichtstrahlabgabe anzusteuern, wobei die Schritte d) und e) mittels einer Berechnung durchgeführt werden auf der Grundlage des Datensatzes zur Festlegung der Begrenzungsflächen und/oder der zumindest einen virtuellen Begrenzungsfläche sowie Information über Positionskoordinaten des Bezugspunktes sowie der Strahlausrichtung der Strahlquelle.

2. Verfahren nach Anspruch 1, **dadurch gekenn- zeichnet**, das s ein Freigabesignal ausgegeben wird, wenn der ermittelte Abstand (L, L') des ermittelten Auftreffortes (SP, SP`) größer ist als die vorgegebene Abstandsschwelle oder wenn der ermittelte Auftreffort (SP, SP`) auf einer Begrenzungsfläche (2, 3, 4, 5, 7) der Schutzumhausung (1) liegt.

3. Verfahren nach Anspruch 1 oder 2, **dadurch ge** - **kennzeichnet**, das s ein Nichtfreigabesignal ausgegeben wird, wenn der ermittelte Abstand (L, L') des Auftreffortes (SP, SP`) kleiner ist als die vorgegebene Abstandsschwelle und wenn gleichzeitig der ermittelte Auftreffort (SP, SP`) auf einer virtuellen Begrenzungsfläche (8,9) der Schutzumhausung (1) liegt.

4. Verfahren nach einem der Ansprüche 1 bis 3,
**dadurch gekennzeichnet, dass** die Betriebsfunktion einen Vorbereitungsschritt zur roboterunterstützten Schweißnahterstellung an zumindest einem zu schweißenden Werkstück umfasst, insbesondere in Form einer Schweißfugenverfolgung oder Schweißfugenerfassung an dem zumindest einem zu schweißenden Werkstück durch Laserscannen der Fügestellen.

5. Verfahren nach einem der Ansprüche 1 bis 4,
**dadurch gekennzeichnet, dass** das Computermodel zur datentechnischen Darstellung der Begrenzungsflächen (2, 3, 4, 5, 7)und/oder zumindest einer virtuellen Begrenzungsfläche (8, 9) eine Mehrzahl von zueinander angeordneten ebenen Flächenabschnitten und/oder Flächenebenen ausgebildet ist.

6. Verfahren nach einem der Ansprüche 1 bis 5,
**dadurch gekennzeichnet, dass** das eine virtuelle Begrenzungsfläche (8, 9) im Computermodell durch zumindest eine zugeordnete ebene Fläche angenähert wird, welche sich zwischen Begrenzungskanten des jeweiligen Öffnungsabschnittes erstreckt und so angeordnet wird, dass sie über einen möglichst großen Streckenabschnitt die Begrenzungskanten berührt.

7. Verfahren nach einem der Ansprüche 1 bis 6,
**dadurch gekennzeichnet, dass** der Schritt des Ermittelns eines Auftreffortes (SP, SP`) des von der Strahlquelle (20) ausgehenden Strahls an Begrenzungsflächen (2, 3, 4, 5, 7) der Schutzumhausung (1) bzw. deren zumindest eine virtuelle Begrenzungsfläche (8, 9) das Ermitteln eines Auftreffortes (SP, SP`) des von der Strahlquelle (20) ausgehenden Strahls an einer durch eine der Begrenzungsflächen verlaufenden Ebene umfasst.

8. Verfahren nach einem der Ansprüche 1 bis 7,
**dadurch gekennzeichnet, dass** vorbestimmte, sichere Ansteuerwerten und/oder vorbestimmte, sichere Positionswerten der Aktuatoren (11 - 15) des Manipulators (10) gespeichert werden und aktuelle und/oder prognostizierte diesbezügliche Werte mit den vorbestimmten, sicheren Werten verglichen werden und bei Erkennen von aktuellen und/oder prognostizierten, nichtsicheren Werten der Aktuatoren (11 - 15) des Manipulators (10) eine Sicherheitsfunktion ausgeführt wird.

9. Verfahren nach einem der Ansprüche 1 bis 8,
**dadurch gekennzeichnet, dass** der Schritt des Ermittelns der Positionskoordinaten des Bezugspunktes (18) unter Ausführung einer Koordinatentransformation von Koordinaten des Bezugspunktes (18) und der vorgegebenen Strahlausrichtung in einem Strahlquellen- bezogenen bzw. Manipulator-bezogenen Koordinatensystem (X; Y; Z) in ein vorbestimmtes Koordinatensystem (X; Y; Z) durchgeführt wird.

10. Verfahren nach einem der Ansprüche 1 bis 9,
**dadurch gekennzeichnet, dass** der Schritt des Ermittelns der Strahlausrichtung unter Ausführung einer Koordinatentransformation von Koordinaten des Bezugspunktes (18) und der vorgegebenen Strahlausrichtung in einem Strahlquellen- bezogenen bzw. Manipulator-bezogenen Koordinatensystem (X`; Y`; Z`) in das vorbestimmtes Koordinatensystem (X; Y; Z) durchgeführt wird.

11. Verfahren nach einem der Ansprüche 1 bis 10,
**dadurch gekennzeichnet, dass** eine erste und/oder zweite zeitliche Ableitung des zeitlichen Verlaufs der ermittelten Positionskoordinaten des vorbestimmten Bezugspunktes (18) und/oder der ermittelten Strahlrichtung der Strahlquelle (20) durchgeführt wird zur Bereitstellung einer Prognose für zukünftige Schnittpunkte (SP, SP') an Begrenzungsflächen (2, 3, 4, 5, 7) und/oder virtuellen Begrenzungsflächen (8, 9) der Schutzumhausung (1).

12. Verfahren nach einem der Ansprüche 1 bis 11,
**dadurch gekennzeichnet, dass** die Schritte d) bis g) abhängig von zumindest einem prognostizierten Auftreffort (SP, SP`) des Strahls an einer Begrenzungsfläche(2, 3, 4, 5, 7) und/oder einer virtuellen Begrenzungsfläche (8, 9) der Schutzumhausung (1) durchgeführt werden.

13. Verfahren nach einem der Ansprüche 1 bis 12,
**dadurch gekennzeichnet, dass** zur Überprüfung der Sicherheitssteuerung die Aktuatoren (11 - 15) des Manipulators (10) derart angesteuert werden, dass der Bezugspunkt (18) einen vorgegebenen Prüfpunkt (60) im Raum, insbesondere einen Prüfpunkt innerhalb der Schutzumhausung (1), einnimmt und die Strahlausrichtung eine vorgegebene Prüfrichtung einnimmt, und mittels einer zu diesen Prüfeinstellungen ausgerichtete Sensoreinrichtung (61) der von der Strahlquelle (20) ausgegebenen Strahl erfasst wird.

14. Verfahren nach einem der Ansprüche 1 bis 13,
**dadurch gekennzeichnet, dass** bei der Ermittlung zumindest eines Auftreffortes des Strahls an virtuellen Begrenzungsflächen (8, 9) zu einer ermittelten Position des Bezugsortes (18) zumindest zwei Auftrefforte ermittelt werden, wobei für die zumindest zwei Auftrefforte der jeweilige Abstand zum Referenzort (21) der Strahlungsquelle (20) ermittelt wird, und ein Freigabesignal nur abgegeben wird, wenn die zumindest zwei Abstände größer als die vorgegebene Abstandsschwelle sind.

15. System umfassend:
einen mehrachsigen Manipulator(10);
eine Strahlquelle (20);
eine nicht vollständig geschlossene Schutzumhausung (1) zur Ausführung einer Betriebsfunktion;
und eine Vorrichtung
zur Sicherheitssteuerung der Strahlquelle (20), die am mehrachsigen Manipulator (10) angeordnet und von diesem innerhalb der nicht vollständig geschlossenen Schutzumhausung (1) zur Ausführung einer Betriebsfunktion bewegbar ist, wobei die Strahlquelle (20) an einem vorgegebenen Montageort und mit einer vorgegebenen Strahlausrichtung am Manipulator (10) befestigt ist, wobei die Vorrichtung zur Sicherheitssteuerung der Strahlquelle (20) ausgebildet ist zum Bereitstellen eines Computermodells umfassend einen Datensatz zur datentechnischen Festlegung von Begrenzungsflächen (2, 3, 4, 5, 7) der Schutzumhausung (1), wobei ein Öffnungsabschnitt der Schutzumhausung (1) als virtuelle Begrenzungsfläche (8) im Datensatz datentechnisch gekennzeichnet wird; zum Ermitteln von Positionskoordinaten eines vorbestimmten Bezugspunktes (18) im Bereich des Montageortes am Manipulator (10) oder der Strahlquelle (20), insbesondere eines Strahlaustrittsortes (21) der Strahlquelle (20); zum Ermitteln der Strahlrichtung der Strahlquelle (20) unter Berücksichtigung der ermittelten Positionskoordinaten des Bezugspunktes (18) und der vorgegebenen Strahlausrichtung der Strahlquelle (20); zum Berechnen eines Schnittortes (SP) des am Strahlaustritt aus der Strahlquelle (20) austretenden Strahls an der Schutzumhausung (1) bzw. deren virtuellen Begrenzungsflächen (8, 9) auf der Grundlage des Datensatzes zur Festlegung der Begrenzungsflächen und/oder der zumindest einen virtuellen Begrenzungsfläche sowie der Information über Positionskoordinaten des Bezugspunktes sowie der Strahlausrichtung der Strahlquelle; zum Ermitteln des Abstandes (L, L') des ermittelten Schnittortes (SP) zum Strahlaustritt des Strahls an der Strahlquelle (20); und zum Vergleichen des Abstandes (L, L') mit einer vorgegebenen Abstandsschwelle und zur Abgabe eines Freigabesignals in Abhängigkeit des Ergebnisses des Vergleiches zur Ansteuerung der Strahlquelle (20) zur Strahlabgabe oder zum Nichtstrahlen.

16. System nach Anspruch 15, **dadurch gekennzeichnet, dass** die Vorrichtung zur Sicherheitssteuerung der Strahlquelle (20) als Teil oder Abschnitt einer Steuereinrichtung (50) zur Ansteuerung der Aktuatoren (11 - 15) des Manipulators (10) und zum Ansteuern der Strahlquelle (20) ausgebildet ist.

## Claims

1. Method for safety control of a beam source (20) such as a laser light source which is arranged on a multi-axis manipulator (10) and is moved by the latter within a protective enclosure (1) which is not completely closed in order to perform an operating function, the beam source (20) being attached to the manipulator (10) at a predetermined mounting location and with a predetermined beam alignment,
comprising the steps of
a) providing a computer model comprising a data set for defining boundary surfaces (2, 3, 4, 5, 7) of the protective enclosure (1), at least one virtual boundary surface (8, 9) being assigned to an opening section of the protective enclosure (1);
b) determining position coordinates of a predetermined reference point (18) in the region of the mounting location on the manipulator (10) or the beam source (20), in particular a flange attachment location or a beam exit location of the beam source (20);
c) determining the beam direction of the beam source, taking into account the determined position coordinates of the reference point (18) and the predetermined beam alignment of the beam source;
d) determining a location of impingement (SP, SP') of the beam emerging from the beam source (20) at at least one boundary surface (2, 3, 4, 5, 7) of the protective enclosure (1) or at at least one virtual boundary surface (8, 9) ;
e) testing whether the location of impingement (SP, SP') of the beam is on a boundary surface (7) of the protective enclosure (1);
f) determining the distance (L, L') of the determined location of impingement (SP, SP') to a predetermined reference location (21) of the beam source (20), in particular to the beam exit location (21) of the beam at the beam source (20);
g) comparing the distance (L, L') with a predetermined distance threshold, an enable signal or non-enable signal being output as a function of the result of the comparison according to step f) and/or as a function of the result of the test according to step e), in order to control the beam source (20) to emit a beam or not to emit a beam, wherein steps d) and e) are performed by means of a calculation on the basis of the data set for defining the boundary surfaces and/or the at least one virtual boundary surface as well as information about position coordinates of the reference point and the beam alignment of the beam source.

2. Method according to claim 1, **characterized in that** an enable signal is emitted if the determined distance (L, L') of the determined location of impingement (SP, SP') is greater than the predetermined distance threshold or if the determined location of impingement (SP, SP') is on a boundary surface (2, 3, 4, 5, 7) of the protective enclosure (1).

3. Method according to claim 1 or 2, **characterized in that** a non-enable signal is output if the determined distance (L, L') of the location of impingement (SP, SP') is smaller than the predetermined distance threshold and if at the same time the determined location of impingement (SP, SP') is on a virtual boundary surface (8, 9) of the protective enclosure (1) .

4. Method according to any one of claims 1 to 3,
**characterized in that** the operating function comprises a preparatory step for robot-assisted weld seam creation on at least one workpiece to be welded, in particular in the form of weld joint tracking or weld joint detection on the at least one workpiece to be welded by laser scanning of the joints.

5. Method according to any one of claims 1 to 4,
**characterized in that** the computer model is designed for the data-technical representation of the boundary surfaces (2, 3, 4, 5, 7) and/or at least one virtual boundary surface (8, 9) of a plurality of mutually arranged planar surface sections and/or surface planes.

6. Method according to any one of claims 1 to 5,
**characterized in that** a virtual boundary surface (8, 9) is approximated in the computer model by at least one planar surface which extends between boundary edges of the respective opening section and is arranged in such a way that it touches the boundary edges over as large a distance section as possible.

7. Method according to any one of claims 1 to 6,
**characterized in that** the step of determining a location of impingement (SP, SP') of the beam emitted by the beam source (20) at boundary surfaces (2, 3, 4, 5, 7) of the protective enclosure (1) or at least one virtual boundary surface (8, 9) thereof comprises determining the location of impingement (SP, SP') of the beam emitted by the beam source (20) at a plane extending through one of the boundary surfaces.

8. Method according to any one of claims 1 to 7,
**characterized in that** predetermined safe control values and/or predetermined safe position values of the actuators (11 - 15) of the manipulator are stored and current and/or predicted values relating thereto are compared with the predetermined safe values and a safety function is executed when current and/or predicted non-safe values of the actuators (11 - 15) of the manipulator (10) are detected.

9. Method according to any one of claims 1 to 8,
**characterized in that** the step of determining the position coordinates of the reference point (18) is carried out by performing a coordinate transformation of coordinates of the reference point (18) and the predetermined beam alignment in a beam source-related or manipulator-related coordinate system (X; Y; Z) into a predetermined coordinate system (X; Y; Z).

10. Method according to any one of claims 1 to 9,
**characterized in that** the step of determining the beam alignment is carried out by performing a coordinate transformation of coordinates of the reference point (18) and the predetermined beam alignment in a beam source-related or manipulator-related coordinate system (X'; Y'; Z') into the predetermined coordinate system (X; Y; Z).

11. Method according to any one of claims 1 to 10,
**characterized in that** a first and/or second temporal derivation of the temporal course of the determined position coordinates of the predetermined reference point (18) and/or of the determined beam direction of the beam source (20) is performed to provide a prediction for future intersection points (SP, SP') at boundary surfaces (2, 3, 4, 5, 7) and or virtual boundary surfaces (8, 9) of the protective enclosure (1) .

12. Method according to any one of claims 1 to 11,
**characterized in that** steps d) to g) are carried out as a function of at least one predicted location of impingement (SP, SP') of the beam on a boundary surface (2, 3, 4, 5, 7) and/or a virtual boundary surface (8, 9) of the protective enclosure (1).

13. Method according to any one of claims 1 to 12,
**characterized in that**, for testing the safety control, the actuators (11 - 15) of the manipulator (10) are controlled in such a way that the reference point (18) occupies a predetermined test point (60) in the space, in particular a test point within the protective enclosure (1), and the beam alignment assumes a predetermined test direction, and the beam emitted by the beam source (20) is detected by means of a sensor device (61) aligned with these test settings.

14. Method according to any one of claims 1 to 13,
**characterized in that**, when determining at least one location of impingement of the beam on virtual boundary surfaces (8, 9) with respect to a determined position of the reference location (18), at least two locations of impingement are determined, the respective distance to the reference location (21) of the radiation source (20) being determined for the at least two locations of impingement, and an enable signal being emitted only if the at least two distances are greater than the predetermined distance threshold.

15. System, comprising:
a multi-axis manipulator (10);
a beam source (20);
a protective enclosure (1), which is not completely closed, for performing an operating function;
and a device for safety control of the beam source (20) which is arranged on the multi-axis manipulator(10) and can be moved by the latter within the protective enclosure (1) which is not completely closed for carrying out an operating function, the beam source (20) being fastened to the manipulator (10) at a predetermined mounting location and with a predetermined beam alignment, wherein the device for safety control of the beam source (20) is designed to provide a computer model comprising a data set for data-technical definition of boundary surfaces (2, 3, 4, 5, 7) of the protective enclosure (1), wherein an opening section of the protective enclosure (1) is identified in the data set as a virtual boundary surface (8) in a date-technical manner; to determine position coordinates of a predetermined reference point (18) in the region of the mounting location on the manipulator (10) or the beam source (20), in particular a beam exit location (21) of the beam source (20); to determine the beam direction of the beam source (20), taking into account the determined position coordinates of the reference point (18) and the predetermined beam source (20); to calculate a location of intersection (SP) of the beam emerging from the beam source (20) at the beam exit on the protective enclosure (1) or its virtual boundary surfaces (8, 9) on the basis of the data set for defining the boundary surfaces and/or the at least one virtual boundary surface as well as information about position coordinates of the reference point and the beam alignment of the beam source; to determine the distance (L, L') of the determined location of intersection (SP) to the beam exit of the beam at the beam source (20); and to compare the distance (L, L') with a predetermined distance threshold and to emit an enable signal as a function of the result of the comparison for controlling the beam source (20) to emit a beam or not to emit a beam.

16. System according to claim 15, **characterized in that** the device for safety control of the beam source (20) is designed as part or section of a control device (50) for controlling the actuators (11 - 15) of the manipulator (10) and for controlling the beam source (20) .

## Revendications

1. Procédé de commande de sécurité d'une source de rayonnement (20) telle qu'une source de lumière laser qui est disposée sur un manipulateur à axes multiples (10) et qui est déplacée par ce dernier à l'intérieur d'une enceinte de protection (1) qui n'est pas complètement fermée afin d'exécuter une fonction opérationnelle, la source de faisceau (20) étant fixée au manipulateur (10) à un emplacement de montage prédéterminé et avec un alignement de faisceau prédéterminé,
comprenant les étapes suivantes:
a) fournir un modèle informatique comprenant un ensemble de données pour définir les surfaces limites (2, 3, 4, 5, 7) de l'enceinte de protection (1), au moins une surface limite virtuelle (8, 9) étant affectée à une section d'ouverture de l'enceinte de protection (1);
b) déterminer les coordonnées de position d'un point de référence prédéterminé (18) dans la zone de l'emplacement de montage sur le manipulateur (10) ou la source de faisceau (20), en particulier un emplacement de fixation de bride ou un emplacement de sortie du faisceau de la source de faisceau (20);
c) déterminer la direction du faisceau de la source de faisceau, en tenant compte des coordonnées de position déterminées du point de référence (18) et de l'alignement prédéterminé du faisceau de la source de faisceau;
d) déterminer un point d'impact (SP, SP') du faisceau émergeant de la source de faisceau (20) sur au moins une surface limite (2, 3, 4, 5, 7) de l'enceinte de protection (1) ou sur au moins une surface limite virtuelle (8, 9);
e) vérifier si le point d'impact (SP, SP') du faisceau se trouve sur une surface limite (7) de l'enceinte de protection (1);
f) déterminer la distance (L, L') entre le point d'impact déterminé (SP, SP') et un point de référence prédéterminé (21) de la source de faisceau (20), en particulier le point de sortie (21) du faisceau au niveau de la source de faisceau (20);
g) comparer la distance (L, L') à un seuil de distance prédéterminé, un signal d'activation ou de nonactivation étant émis en fonction du résultat de la comparaison selon l'étape f) et/ou en fonction du résultat du test selon l'étape e), afin de commander la source de faisceau (20) pour qu'elle émette un faisceau ou qu'elle n'en émette pas, les étapes d) et e) sont effectuées au moyen d'un calcul sur la base de l'ensemble de données permettant de définir les surfaces limites et/ou l'au moins une surface limite virtuelle, ainsi que des informations relatives aux coordonnées de position du point de référence et à l'alignement du faisceau de la source de faisceau.

2. Procédé selon la revendication 1, **caractérisé en ce qu'**un signal d'activation est émis si la distance déterminée (L, L') du lieu d'impact déterminé (SP, SP') est supérieure au seuil de distance prédéterminé ou si le lieu d'impact déterminé (SP, SP') se trouve sur une surface limite (2, 3, 4, 5, 7) de l'enceinte de protection (1).

3. Procédé selon la revendication 1 ou 2, **caractérisé en ce qu'**un signal de non-activation est émis si la distance déterminée (L, L') du lieu d'impact (SP, SP') est inférieure au seuil de distance prédéterminé et si, en même temps, le lieu d'impact déterminé (SP, SP') se trouve sur une surface limite virtuelle (8, 9) de l'enceinte de protection (1).

4. Procédé selon l'une des revendications 1 à 3,
**caractérisé en ce que** la fonction opérationnelle comprend une étape préparatoire à la création de cordons de soudure assistée par robot sur au moins une pièce à souder, en particulier sous la forme d'un suivi ou d'une détection des cordons de soudure sur au moins une pièce à souder par balayage laser des cordons.

5. Procédé selon l'une des revendications 1 à 4,
**caractérisé en ce que** le modèle informatique est conçu pour la représentation, par la technologie de données, des surfaces limites (2, 3, 4, 5, 7) et/ou d'au moins une surface limite virtuelle (8, 9) d'une pluralité de sections de surface planes et/ou de plans de surface disposés les uns par rapport aux autres.

6. Procédé selon l'une des revendications 1 à 5,
**caractérisé en ce que** qu'une surface limite virtuelle (8, 9) est approximée dans le modèle informatique par au moins une surface plane qui s'étend entre les bords de la section d'ouverture respective et est disposée de telle sorte qu'elle touche les bords de la section sur une distance aussi grande que possible.

7. Procédé selon l'une des revendications 1 à 6,
**caractérisé en ce que** l'étape consistant à déterminer un point d'impact (SP, SP') du faisceau émis par la source de faisceau (20) sur les surfaces limites (2, 3, 4, 5, 7) de l'enceinte de protection (1) ou sur au moins une de ses surfaces limites virtuelles (8, 9) consiste à déterminer le point d'impact (SP, SP') du faisceau émis par la source de faisceau (20) sur un plan s'étendant à travers l'une des surfaces limites.

8. Procédé selon l'une des revendications 1 à 7,
**caractérisé en ce que** des valeurs de commande sûres prédéterminées et/ou des valeurs de position sûres prédéterminées des actionneurs (11 - 15) du manipulateur sont stockées et que les valeurs actuelles et/ou prédites qui s'y rapportent sont comparées aux valeurs sûres prédéterminées et qu'une fonction de sécurité est exécutée lorsque des valeurs non sûres actuelles et/ou prédites des actionneurs (11 - 15) du manipulateur (10) sont détectées.

9. Procédé selon l'une des revendications 1 à 8,
**caractérisé en ce que** l'étape de détermination des coordonnées de position du point de référence (18) est réalisée en effectuant une transformation des coordonnées du point de référence (18) et de l'alignement prédéterminé du faisceau dans un système de coordonnées lié à la source du faisceau ou au manipulateur (X; Y; Z) en un système de coordonnées prédéterminé (X; Y; Z).

10. Procédé selon l'une des revendications 1 à 9,
**caractérisé en ce que** l'étape consistant à déterminer l'alignement du faisceau est réalisée en effectuant une transformation des coordonnées du point de référence (18) et de l'alignement prédéterminé du faisceau dans un système de coordonnées lié à la source du faisceau ou au manipulateur (X'; Y'; Z') dans le système de coordonnées prédéterminé (X; Y; Z).

11. Procédé selon l'une des revendications 1 à 10,
**caractérisé en ce qu'**une première et/ou une deuxième dérivation temporelle de l'évolution temporelle des coordonnées de position déterminées du point de référence prédéterminé (18) et/ou de la direction déterminée du faisceau de la source de faisceau (20) est effectuée pour fournir une prédiction des futurs points d'intersection (SP, SP') aux surfaces de délimitation (2, 3, 4, 5, 7) et aux surfaces de délimitation virtuelles (8, 9) de l'enceinte de protection (1).

12. Procédé selon l'une des revendications 1 à 11,
**caractérisé en ce que** les étapes d) à g) sont effectuées en fonction d'au moins un emplacement prévu de l'impact (SP, SP') du faisceau sur une surface limite (2, 3, 4, 5, 7) et/ou une surface limite virtuelle (8, 9) de l'enceinte de protection (1).

13. Procédé selon l'une des revendications 1 à 12,
**caractérisé en ce que**, pour tester la commande de sécurité, les actionneurs (11 - 15) du manipulateur (10) sont commandés de telle sorte que le point de référence (18) occupe un point d'essai prédéterminé (60) dans l'espace, en particulier un point d'essai à l'intérieur de l'enceinte de protection (1), et que l'alignement du faisceau prenne une direction d'essai prédéterminée, et que le faisceau émis par la source de faisceau (20) soit détecté au moyen d'un dispositif de détection (61) aligné sur ces paramètres d'essai.

14. Procédé selon l'une des revendications 1 à 13,
**caractérisé en ce que**, lors de la détermination d'au moins un point d'impact du faisceau sur les surfaces limites virtuelles (8, 9) par rapport à une position déterminée du point de référence (18), au moins deux points d'impact sont déterminés, la distance respective par rapport au point de référence (21) de la source de rayonnement (20) étant déterminée pour les au moins deux points d'impact, et un signal d'activation n'étant émis que si les au moins deux distances sont supérieures au seuil de distance prédéterminé.

15. Système comprenant
un manipulateur à axes multiples (10);
une source de faisceau (20);
une enceinte de protection (1), qui n'est pas complètement fermée, pour assurer une fonction opérationelle;
et un dispositif de commande de sécurité de la source de faisceau (20) qui est disposé sur le manipulateur à axes multiples (10) et peut être déplacé par ce dernier à l'intérieur de l'enceinte de protection (1) qui n'est pas complètement fermée pour exécuter une fonction opérationelle, la source de faisceau (20) étant fixée au manipulateur (10) à un emplacement de montage prédéterminé et avec un alignement de faisceau prédéterminé, dans lequel le dispositif de commande de sécurité de la source de faisceau (20) est conçu pour fournir un modèle informatique comprenant un ensemble de données pour la définition, par la technologie de données, des surfaces limites (2, 3, 4, 5, 7) de l'enceinte de protection (1), dans lequel une section d'ouverture de l'enceinte de protection (1) est identifiée dans l'ensemble de données comme une surface limite virtuelle (8); déterminer les coordonnées de position d'un point de référence prédéterminé (18) dans la région de l'emplacement de montage sur le manipulateur (10) ou de la source de faisceau (20), en particulier un emplacement de sortie de faisceau (21) de la source de faisceau (20); déterminer la direction du faisceau de la source de faisceau (20), en tenant compte des coordonnées de position déterminées du point de référence (18) et de la source de faisceau prédéterminée (20); calculer un lieu d'intersection (SP) du faisceau émergeant de la source de faisceau (20) à la sortie du faisceau sur l'enceinte de protection (1) ou ses surfaces limites virtuelles (8, 9) sur la base de l'ensemble de données pour définir les surfaces limites et/ou l'au moins une surface limite virtuelle, ainsi que des informations sur les coordonnées de position du point de référence et l'alignement du faisceau de la source de faisceau;
déterminer la distance (L, L') entre le lieu d'intersection déterminé (SP) et la sortie du faisceau au niveau de la source de faisceau (20); comparer la distance (L, L') à un seuil de distance prédéterminé et émettre un signal de validation en fonction du résultat de la comparaison afin de commander la source de faisceau (20) pour qu'elle émette un faisceau ou qu'elle n'en émette pas.

16. Système selon la revendication 15, **caractérisé en ce que** le dispositif de commande de sécurité de la source de faisceau (20) est conçu comme partie ou section d'un dispositif de commande (50) pour commander les actionneurs (11 - 15) du manipulateur (10) et pour commander la source de faisceau (20).
